(19) Europäisches Patentamt
European Patent Office
Office européen des brevets

(11) EP 2 060 592 B1

(12) # EUROPÄISCHE PATENTSCHRIFT

(45) Veröffentlichungstag und Bekanntmachung des Hinweises auf die Patenterteilung:
**27.01.2010 Patentblatt 2010/04**

(51) Int Cl.:
***C08G 18/10*** *(2006.01)* ***C08G 59/22*** *(2006.01)*
***C08G 59/38*** *(2006.01)* ***C09J 175/12*** *(2006.01)*

(21) Anmeldenummer: **07120720.3**

(22) Anmeldetag: **14.11.2007**

(54) **Hitzehärtende Epoxidharzzusammensetzung enthaltend nichtaromatische Harnstoffe als Beschleuniger**

Non-aromatic ureae containing thermosetting epoxy resin composition for use as a catalyst

Composition de résine époxy durcissant à la chaleur contenant des urées non aromatiques en tant qu'accélérateurs

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**20.05.2009 Patentblatt 2009/21**

(73) Patentinhaber: **Sika Technology AG
6340 Baar (CH)**

(72) Erfinder:
- **Kramer, Andreas Dr.
8006, Zürich (CH)**
- **Finter, Jürgen Dr.
8037, Zürich (CH)**
- **Frick, Karsten
5453, Remetschwil (CH)**
- **Rheinegger, Urs
8049, Zürich (CH)**
- **Schulenburg, Jan Olaf
8037 Zürich (CH)**

(74) Vertreter: **Sika Patent Attorneys
c/o Sika Technology AG
Geschäftsstelle Zürich
Tüffenwies 16
Postfach
8048 Zürich (CH)**

(56) Entgegenhaltungen:
**EP-A- 1 359 202** **EP-A- 1 728 825**
**EP-A- 1 741 734** **WO-A-2004/055092**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 060 592 B1

## Beschreibung

### Technisches Gebiet

Die Erfindung betrifft das Gebiet der schlagzähen hitzehärtenden Epoxidharzzusammensetzungen, insbesondere für den Einsatz als Rohbauklebstoff und zur Herstellung von Strukturschäumen.

### Stand der Technik

Hitzehärtende Epoxidharzzusammensetzungen sind seit langem bekannt. Es wurden schon seit einiger Zeit Anstrengungen unternommen, den grossen Nachteil von Epoxidharzzusammensetzungen, nämlich ihre Sprödigkeit, welche bei Schlagbeanspruchung dazu führt, dass die ausgehärtete Epoxidharzzusammensetzung Risse bekommt, bzw. zerstört wird, zu beheben oder zumindest stark zu vermindern. Dies wurde durch den Zusatz von Zähigkeitsmodifikatoren oder durch chemische Modifikation von Epoxidharzen bereits versucht.

Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Damit eine schnelle Härtung erfolgen kann, werden neben hitzeaktivierbaren Härtern für Epoxidharze üblicherweise Beschleuniger verwendet. Eine wichtige Kategorie von Beschleunigern sind Harnstoffe. Schlagzähe hitzehärtende Epoxidharzzusammensetzungen, welche Harnstoffe als Beschleuniger aufweisen können, sind beispielsweise aus WO-A-2004/055092, WO-A-2005/007720 und WO-A-2007/003650 bekannt.

Es sind derzeit jedoch Bestrebungen im Markt im Gange, die Temperatur der KTL-Öfen abzusenken. Somit ist im Markt ein grosses Bedürfnis nach hitzehärtenden Epoxidharzzusammensetzungen vorhanden, welche auch bei tieferen Temperaturen, d.h. bei einer Temperatur von 150 bis 170°C, bereits nach kurzer Zeit, typischerweise 10 bis 15 Minuten, aushärten. Deshalb werden aromatische Harnstoffe eingesetzt, welche aufgrund ihrer Struktur bedeutend reaktiver sind. Es hat sich jetzt aber gezeigt, dass die Verwendung von derartigen aromatischen Beschleunigern zu grossen Problemen in der Lagerstabilität der hitzehärtenden Epoxidharzzusammensetzungen führt

### Darstellung der Erfindung

Aufgabe der vorliegenden Erfindung ist es daher, schlagzähe hitzehärtende Epoxidharzzusammensetzungen zur Verfügung zu stellen, welche einerseits eine gute Lagerstabilität bei Raumtemperatur aufweisen und andererseits über eine schnelle Aushärtung bei Temperaturen von 170°C bis 160°C, typischerweise bei 165°C, verfügen.

Diese Aufgabe konnte überraschenderweise durch eine hitzehärtende Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, sowie zur Herstellung von Beschichtungen, insbesondere von Lacken, sowie zur Herstellung eines Strukturschaums für die Verstärkung von Hohlräumen, insbesondere von metallischen Strukturen, verwenden.

Völlig überraschend wurde weiterhin gefunden, dass die Verwendung eines Beschleunigers der Formel (Ia) oder (Ib) zur Erhöhung der Schlagzähigkeit von hitzehärtenden Epoxidharzzusammensetzungen führt. Dies gilt auch für den Fall hitzehärtender Epoxidharzzusammensetzungen, welche bereits über ein beträchtliches Mass an Schlagzähigkeit (zum Beispiel gemessen als Schlagfestigkeit nach ISO 11343) verfügen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft hitzehärtende Epoxidharzzusammensetzungen, welche

a) mindestens ein Epoxidharz **A** mit durchschnittlich mehr als einer Epoxidgruppe pro Molekül;
b) mindestens einen Härter **B** für Epoxidharze, welcher durch erhöhte Temperatur aktiviert wird und ein Amin, Amid, Carbonsäureanhydrid oder Polyphenol ist;
c) mindestens einen Beschleuniger **C** der Formel (Ia) oder (Ib)

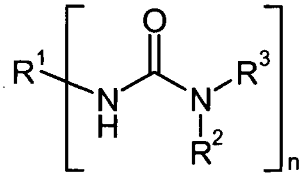 (Ia) 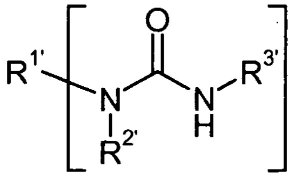 (Ib)

sowie
d) mindestens einen Zähigkeitsverbesserer D
umfassen.

In Formel (Ia) für den Beschleuniger **C** steht $R^1$ für H oder einen n-wertigen aliphatischen, cycloaliphatischen oder araliphatischen Rest.

Weiterhin stehen $R^2$ und $R^3$
entweder
je unabhängig von einander für eine Alkylgruppe oder Aralkylgruppe;
oder
zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist.

Schliesslich steht n für einen Wert von 1 bis 4, insbesondere für 1 oder 2.

In Formel (Ib) für den Beschleuniger **C** steht $R^{1'}$ für einen n'-wertigen aliphatischen, cycloaliphatischen oder araliphatischen Rest.

$R^{2'}$ steht für eine Alkylgruppe oder Aralkylgruppe oder Alkylengruppe.

$R^{3''}$ steht unabhängig von einander für H oder eine Alkylgruppe oder Aralkylgruppe.

Schliesslich steht n' für einen Wert von 1 bis 4, insbesondere für 1 oder 2.

Der Term "unabhängig voneinander" in der Definition von Gruppen und Resten bedeutet, dass mehrere vorkommende aber in den Formeln gleich bezeichnete Gruppen jeweils unterschiedliche Bedeutungen aufweisen können.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Es ist wesentlich für die Erfindung, dass, falls $R^1$ nicht für H steht, $R^1$ für einen n-wertigen aliphatischen, cycloaliphatischen oder araliphatischen Rest und nicht für einen aromatischen oder heteroaromatischen Rest steht. D.h. der Beschleuniger **C** weist insbesondere <u>nicht</u> die Formel (I') auf.

Ebenso ist es wesentlich, dass, falls $R^{3'}$ nicht für H steht, $R^{3'}$ nicht für einen aromatischen oder heteroaromatischen Rest steht, d.h. der Beschleuniger **C** insbesondere <u>nicht</u> die Formel (I") aufweist.

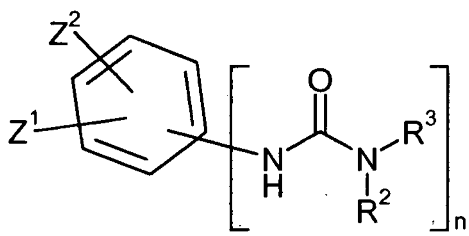 (I')

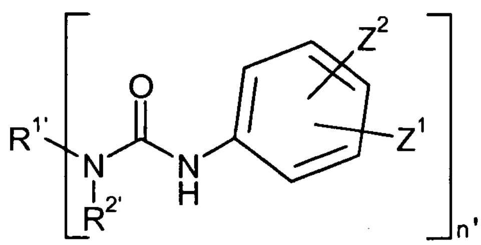 (I")

wobei $Z^1$ und $Z^2$ für H oder einen beliebigen organischen Rest stehen.

Es hat sich gezeigt, dass Beschleuniger mit aromatischen Resten $R^1$ nicht lagerstabil sind, das heisst, sie erhöhen die Viskosität von hitzehärtenden Epoxidharzzusammensetzungen innert kurzer Zeit zu einem für die Handhabung der Zusammensetzung nicht mehr vernachlässigbaren Ausmass.

$R^1$ steht insbesondere für einen Rest eines aliphatischen, cycloaliphatischen oder araliphatischen Mono-, Di-, Tri- oder Tetraisocyanates der Formel (III) nach Entfernung der n Isocyanatgruppen.

$$R^1[NCO]_n \qquad (III)$$

Dieses Mono- Di- Tri- oder Tetraisocyanat der Formel (III) ist entweder ein monomeres Mono-, Di-, Tri- oder Tetraisocyanat oder ein Dimer oder Oligomer eines oder mehrerer monomeren Di- oder Triisocyanates, wobei als Dimer oder Oligomer insbesondere Biurete, Isocyanurate und Uretdione gelten.

Geeignete monomere Monoisocyanate sind Alkylisocyanate, wie beispielsweise Butylisocyanat, Pentylisocyanat, Hexylisocyanat, Octylisocyanat, Decylisocyanat und Dodecylisocyanat, sowie Cyclohexylisocyanat, Methylcyclohexylisocyanat sowie Benzylisocyanat.

Besonders geeignete monomere Diisocyanate sind 1,4-Butandiisocyanat, Hexamethylendiisocyanat (HDI), Isophorondiisocyanat (IPDI), Trimethylhexamethylendiisocyanat (TMDI), 2,5- oder 2,6-Bis-(isocyanatomethyl)-bicyclo [2.2.1] heptan, Dicyclohexylmethyldiisocyanat ($H_{12}MDI$), m-Tetramethylxylylen diisocyanat (TMXDI) und m-Xylylendiisocyanat (XDI) und hydriertes m-Xylylendiisocanat ($H_8XDI$).

Besonders geeignete Dimere oder Oligomere sind HDI-Biuret, HDI-Isocyanurat, IPDI-Biuret, IPDI-Isocyanurat, HDI-Diuretdion, IPDI-Isocyanurat,

Derartige Dimere oder Oligomere sind kommerziell beispielsweise erhältlich als Desmodur N-100 (Bayer), Luxate HDB 9000 (Lyondell), Desmodur N-3300 (Bayer), Desmodur N-3600 (Bayer), Luxate HT 2000 (Lyondell), Desmodur N-3400 (Bayer), Luxate HD 100 (Lyondell), Desmodur Z 4470 (Bayer), Vestanat T 1890/100 (Hüls) oder Luxate IT 1070 (Lyondell).

Selbstverständlich können auch geeignete Mischungen von den genannten Di- oder Triisocyanaten eingesetzt werden.

$R^1$ steht insbesondere
entweder
für eine Alkylengruppe mit 4 bis 10 Kohlenstoffatomen, insbesondere für eine Hexamethylengruppe,
oder für

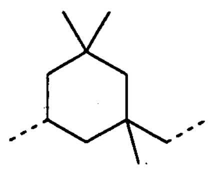

oder
für ein Biuret oder ein Isocyanurat eines aliphatischen oder araliphatischen Diisocyanates, nach Entfernung der Isocyanatgruppen;
oder
für eine Xylylengruppe, insbesondere für eine m-Xylylengruppe.

Besonders bevorzugt als $R^1$ wird HDI, IPDI, HDI-Biuret sowie XDI nach Entfernung der NCO-Gruppen.

$R^2$ und $R^3$ bilden zusammen besonders geeignet eine Butylen-, Pentamethylen- oder Hexamethylengruppe, vorzugsweise eine Pentamethylengruppe.

Bevorzugt stehen $R^2$ und $R^3$ unabhängig von einander je für eine Alkylgruppe mit 1 bis 5 Kohlenstoffatomen, insbesondere je unabhängig von einander je für eine Methyl-, Ethyl- oder Propyl-Gruppe, vorzugsweise je für eine Methylgruppe.

$R^1$ steht in einer Ausführungsform für H. Dies ist bevorzugt in dem Fall, wo $R^2$ und $R^3$ unabhängig von einander je für eine Methyl-, Ethyl- oder Propyl-Gruppe, vorzugsweise je für je für eine Methylgruppe, stehen.

$R^1$ steht insbesondere bevorzugt für einen n-wertigen aliphatischen, cycloaliphatischen oder araliphatischen Rest.

$R^{1'}$ steht einerseits insbesondere für ein Diamin, welches ausgewählt ist aus der Gruppe bestehend aus 1,4-Diaminobutan, Hexamethylendiamin, Isophorondiamin, Trimethylhexamethylendiamin, 2,5- oder 2,6-Bis-(aminomethyl)-bicyclo[2.2.1] heptan, Dicyclohexylmethyldiamin, m-Tetramethylxylylen diamin und m-Xylylendiamin, hydriertes m-Xylylendiamin, Ethylendiamin, 1,3-Propandiamin und 1,2-Propandiamin, nach der Entfernung der zwei Aminogruppen.

$R^{2'}$ steht einerseits insbesondere für einen $C_1$-$C_{10}$-Alkylrest oder einen Aralkylrest mit 7 bis 20 C-Atomen, bevorzugt für eine Methyl-, Ethyl-, Propyl-, Butyl- oder Pentylgruppe.

$R^{1'}$ steht andererseits insbesondere für eine Ethylen-, Propylen-, Butylen-, Methylethylen- oder 1,2-Dimethylethylen-Gruppe.

$R^{2'}$ steht andererseits insbesondere für eine Ethylen-, Propylen-, Butylen-, Methylethylen- oder 1,2-Dimethylethylen-Gruppe.

Die zwei Alkylengruppen $R^{1'}$ und $R^{2'}$ bilden zusammen mit den Harnstoff-Stickstoffatomen einen Ring, insbesondere Piperazin oder 2,3,5,6-Tetramethylpiperazin oder Homopiperazin (1,4-Diazacycloheptan).

$R^{3'}$ steht insbesondere für ein monomeres Monoisocyanat, welches ausgewählt ist aus der Gruppe bestehend aus Butylisocyanat, Pentylisocyanat, Hexylisocyanat, Octylisocyanat, Decylisocyanat und Dodecylisocyanat, sowie Cyclohexylisocyanat, Methylcyclohexylisocyanat und Benzylisocyanat.

Die Beschleuniger **C** der Formel (Ia) sind synthetisch leicht aus der Reaktion eines aliphatischen, cycloaliphatischen oder araliphatischen Mono-, Di-, Tri- oder Tetraisocyanates der Formel (III) mit einem sekundären Amin der Formel (IV) zugänglich.

$R^1[NCO]_n$ (III)

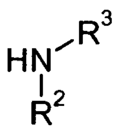
(IV)

In einer zweiten Variante der Synthese wird der Beschleuniger **C** der Formel (Ia) sie aus der Reaktion eines primären aliphatischen, cycloaliphatischen oder araliphatischen Amines der Formel (V) und einer Verbindung der Formel (VI) hergestellt.

$R^1[NH_2]_n$ (V)

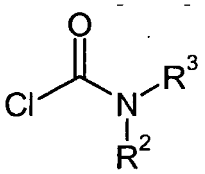
(VI)

Letztere Variante ist insbesondere dann vorteilhaft wenn Polyisocyanate der Formel (III) kommerziell nicht oder nur schwer erhältlich sind.

Die Beschleuniger **C** der Formel (Ib) sind synthetisch leicht aus der Reaktion eines aliphatischen, cycloaliphatischen oder araliphatischen Monoisocyanates der Formel (IIIa) mit einem sekundären Amin der Formel (IVa) oder (IVb) zugänglich.

$R^{3'}NCO$ (IIIa)

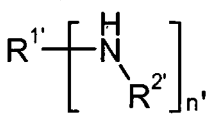
(IVa)

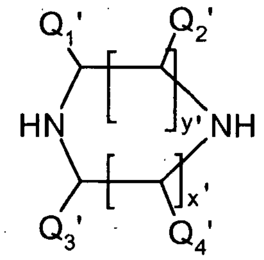

(IVb)

In Formel (IVb) steht x' und y' je unabhängig voneinander für die Werte 1, 2, 3, 4 oder 5 und die Substituenten $Q^{1'}$, $Q^{2'}$, $Q^{3'}$ und $Q^{4'}$ stehen unabhängig von einander je für H oder für eine $C_1$- bis $C_5$-Alkylgruppe. Bevorzugt stehen x' und y' für 1 oder 2, bevorzugt je 1, d.h. Das sekundäre Amin der Formel (IVb) ist bevorzugt Piperazin oder 2,3,5,6-Tetramethylpiperazin oder Homopiperazin (1,4-Diazacycloheptan), besonders bevorzugt Piperazin oder 2,3,5,6-Tetramethylpiperazin.

Die sekundären Amine der Formel (IVa) lassen sich ihrerseits insbesondere leicht aus der Alkylierung von primären Aminen der Formel $R^{1'}[NH_2]_n$, herstellen.

Besonders bevorzugte Amine der Formel (IVa) sind ausgewählt aus der Gruppe bestehend aus N,N'-Dimethyl-1,2-Diaminocyclohexan, N,N'-Dimethylethylendiamin, N,N'-Dimethyl-1,3-propandiamin, Bis-Isopropyliertes IPDA (Jefflink-754 (Huntsman)), N,N'-Diisobutyl-ethylendiamin und N-Ethyl-N'-methyl-ethylendiamin.

Der Beschleuniger **C** weist insbesondere ein Molekül von weniger als 1000 g/mol, insbesondere zwischen 80 und 800 g/mol auf. Ist das Molekulargewicht grösser ist die Beschleunigungswirkung reduziert und die notwendig Einsatzmenge ist bedeutend höher, was wiederum zu schlechter Mechanik führen kann.

Die Menge des Beschleunigers **C** beträgt vorteilhaft 0.01 - 6.0 Gew.-%, insbesondere 0.02 - 4.0 Gew.-%, bevorzugt 0.02 - 2.0 Gew.-%, bezogen auf das Gewicht des Epoxidharzes **A**.

Weiterhin enthält die hitzehärtende Epoxidharzzusammensetzung mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Partikel zerkleinern.

Bevorzugte Epoxid-Festharze weisen die Formel (A-I) auf

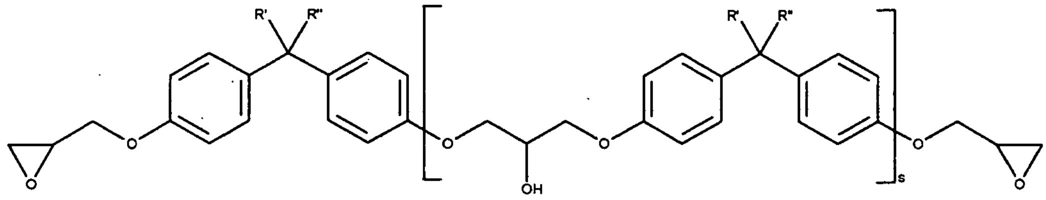

(A-I)

Hierbei stehen die Substituenten R' und R" unabhängig voneinander entweder für H oder $CH_3$.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (A-I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (A-II) auf

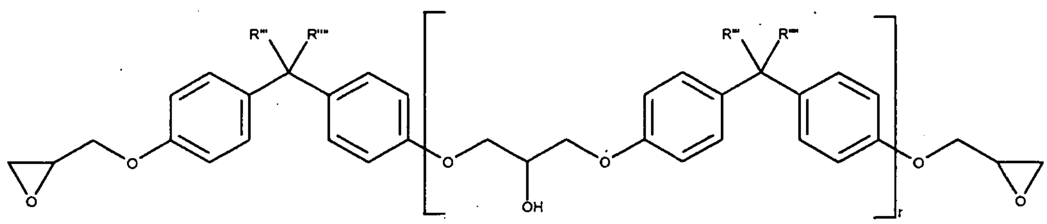

(A-II)

Hierbei stehen die Substituenten R''' und R'''' unabhängig voneinander entweder für H oder $CH_3$. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ‚A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.T™ 330 (Dow) oder Epikote 828 (Hexion) erhältlich.

Bevorzugt stellt das Epoxidharz **A** ein Epoxid-Flüssigharz der Formel (A-II) dar. In einer noch mehr bevorzugten Ausführungsform enthält die hitzehärtende Epoxidharzzusammensetzung sowohl mindestens ein Epoxid-Flüssigharz der Formel (A-II) als auch mindestens ein Epoxid-Festharz der Formel (A-I).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Weiterhin enthält die hitzehärtende Epoxidharzzusammensetzung mindestens einen Härter **B** für Epoxidharze, welcher durch erhöhte Temperatur aktiviert wird und ein Amin, Amid, Carbonsäureanhydrid oder Polyphenol ist.

Als Amine gelten auch Amine in quaternärer Form wie beispielsweise Borhalogenid-Ammoniumsalze von Aminen.

Derartige Härter sind dem Fachmann bestens bekannt. Bevorzugte Amine sind Biguanide oder 3,3'- oder 4.4'-Diaminodiphenolsulfon oder Mischungen davon. Bevorzugte Amide sind die Dihydrazide von Adipinsäure oder Sebazinsäure. Bevorzugte Carbonsäureanhydride sind Pyromellitsäuredianhydrid oder die Salze von Pyromellitsäuredianhydrid mit Imidazolen, wie sie beispielsweise Vestagon® B55 bei Degussa kommerziell erhältlich sind, Trimellitsäureanhydrid oder Derivate von Trimellitsäureanhydrid, wie sie beispielsweise als Aradur® 3380 von Huntsman kommerziell erhältlich sind. Bevorzugte Polyphenole sind Phenol- oder Kresolnovolacke, wie sie beispielsweise als Aradur® 3082 von Huntsman kommerziell erhältlich sind.

Insbesondere handelt es sich um einen der Härter B, welcher ausgewählt ist aus der Gruppe bestehend aus Diaminodiphenolsulfon, Adipinsäuredihydrazid, Derivate von Trimellitsäureanhydrid ,Novolacke und Dicyandiamid

Als meist bevorzugt als Härter **B** gilt Dicyandiamid.

Die Menge des Härters **B** für Epoxidharze, welcher durch erhöhte Temperatur aktiviert wird, beträgt vorteilhaft 0.1 - 30 Gew.-%, insbesondere 0.2 - 10 Gew.-%, bezogen auf das Gewicht des Epoxidharzes **A.**

Weiterhin enthält die hitzehärtende Epoxidharzzusammensetzung mindestens einen Zähigkeitsverbesserer **D**.

Unter einem "Zähigkeitsverbesserer" wird in diesem Dokument ein Zusatz zu einer Epoxidharzmatrix verstanden, der bereits bei geringen Zuschlägen von 0.1 - 50 Gew.-%, insbesondere von 0.5 - 40 Gew.-%, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Der Zähigkeitsverbesserer **D** kann ein fester oder ein flüssiger Zähigkeitsverbesserer sein.

Feste Zähigkeitsverbesserer sind in einer ersten Ausführungsform organische Ionen-getauschte Schichtmineralien. Derartige Zähigkeitsverbesserer sind beispielsweise in US 5,707,439 oder in US 6,197,849 beschrieben. Besonders geeignete derartige feste Zähigkeitsverbesserer sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garamite® (Southern Clay Products) erhältlich.

Feste Zähigkeitsverbesserer sind in einer zweiten Ausführungsform Blockcopolymere. Das Blockcopolymer wird beispielsweise erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Feste Zähigkeitsverbesserer sind in einer dritten Ausführungsform Core-Shell Polymere. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten.

Feste Zähigkeitsverbesserer sind in einer vierten Ausführungsform feste Umsetzungsprodukte eines carboxylierten festen Nitrilkautschuks mit überschüssigem Epoxidharz.

Flüssige Zähigkeitsverbesserer sind bevorzugt Flüssigkautschuke oder flüssige Zähigkeitsverbesserer basierend auf einem Polyurethanpolymer.

In einer ersten Ausführungsform ist der Flüssigkautschuk ein Acrylonitil/Butadien-Copolymer, welches mit Carboxylgruppen oder (Meth)acrylatgruppen oder Epoxidgruppen terminiert ist, oder ein Derivat davon ist.

Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxidgruppen aufweisende Elastomer-modifizierte Polymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer zweiten Ausführungsform ist dieser Flüssigkautschuk ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer dritten Ausführungsform ist dieser Flüssigkautschuk ein Polyetheramid, welches mit Carboxylgruppen oder Epoxidgruppen terminiert ist. Derartige Polyamide sind insbesondere hergestellt aus der Umsetzung von aminoterminierten Polyethylenether oder Polypropylenether, wie sie zum Beispiel unter dem Namen Jeffamine® von Huntsman vertrieben werden, mit Dicarbonsäureanhydrid nachfolgender Reaktion mit Epoxidharzen, wie sie zum im Beispiel 15 in Verbindung mit Beispiel 13 von DE 2123033 beschrieben sind. Anstelle von Dicarbonsäureanhydrid können auch Hydroxybenzoesäure oder Hydroxybenzoate verwendet werden.

Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

Bevorzugt ist der Zähigkeitsverbesserer **D** ausgewählt aus der Gruppe bestehend aus blockierten Polyurethanpolymeren, Flüssigkautschuken, Epoxidharz-modifizierten Flüssigkautschuken und Core-Shell-Polymeren.

In einer bevorzugten Ausführungsform ist der Zähigkeitsverbesserer **D** ein blockiertes Polyurethanpolymer der Formel (II).

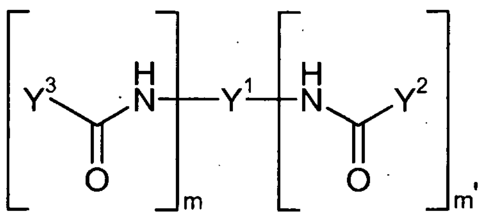

(II)

Hierbei stehen m und m' je für Werte zwischen 0 und 8, mit der Massgabe, dass m +m' für einen Wert von 2 bis 8 steht.

Weiterhin steht $Y^1$ für ein mit m+m' Isocyanatgruppen terminiertes lineares oder verzweigtes Polyurethanpolymer **PU1** nach dem Entfernen aller endständigen Isocyanatgruppen.

$Y^2$ steht unabhängig von einander für eine Blockierungsgruppe, welche sich bei einer Temperatur über 100°C abspaltet.

$Y^3$ steht unabhängig von einander für eine Gruppe der Formel (II').

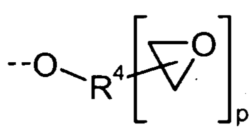

(II')

Hierbei steht $R^4$ seinerseits für einen Rest eines eine primäre oder sekundäre Hydroxylgruppe enthaltenden

aliphatischen, cycloaliphatischen, aromatischen oder araliphatischen Epoxids nach dem Entfernen der Hydroxid-und Epoxidgruppen und p steht für die Werte 1, 2 oder 3.

$Y^2$ steht insbesondere unabhängig voneinander für einen Substituenten, welcher ausgewählt ist aus der Gruppe bestehend aus

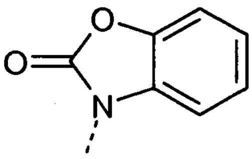 , 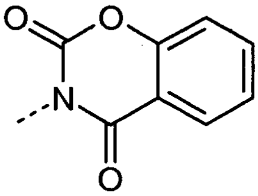 , 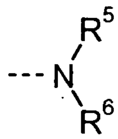 , 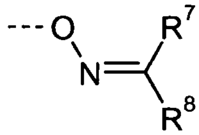 ,

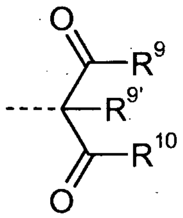 , 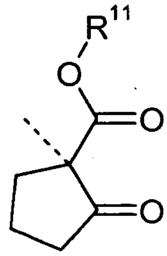 , 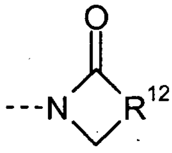 , 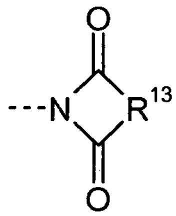 ,

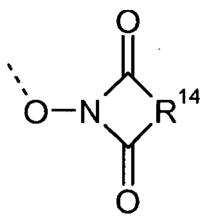 , 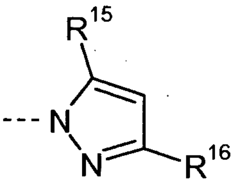 , 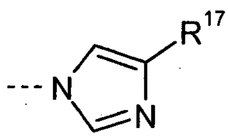 , 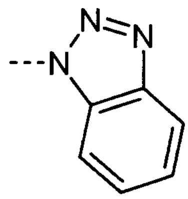 ,

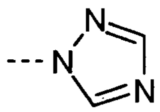 , 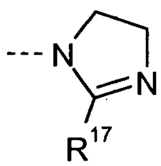 und ---O—$R^{18}$;

Hierbei stehen $R^5$, $R^6$, $R^7$ und $R^8$ je unabhängig voneinander für eine Alkyl- oder Cycloalkyl- oder Aralkyl- oder Arylalkyl-Gruppe oder aber $R^5$ bildet zusammen mit $R^6$, oder $R^7$ zusammen mit $R^8$, einen Teil eines 4- bis 7-gliedrigen Rings, welcher allenfalls substituiert ist.

Weiterhin steht $R^9$, $R^{9'}$ und $R^{10}$ je unabhängig voneinander für eine Alkyl- oder Aralkyl- oder Arylalkyl-Gruppe oder für eine Alkyloxy- oder Aryloxy-oder Aralkyloxy-Gruppe und $R^{11}$ für eine Alkylgruppe.

$R^{13}$ und $R^{14}$ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und $R^{15}$, $R^{16}$ und $R^{17}$ stehen je unabhängig voneinander für H oder für eine Alkylgruppe oder für eine Arylgruppe oder eine Aralkylgruppe.

Schliesslich steht $R^{18}$ für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.

Als $R^{18}$ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als $R^{18}$ sind andererseits insbesondere Hydroxybenzylalkohol und Benzylalkohol nach Entfernung einer Hydroxylgruppe zu betrachten.

Falls $R^5$, $R^6$, $R^7$, $R^8$, $R^9$, $R^{9'}$, $R^{10}$, $R^{11}$, $R^{15}$, $R^{16}$ oder $R^{17}$ für eine Alkylgruppe steht, ist diese insbesondere eine lineare oder verzweigte $C_1$-$C_{20}$-Alkylgruppe.

Falls $R^5$, $R^6$, $R^7$, $R^8$, $R^9$, $R^{9'}$, $R^{10}$, $R^{15}$, $R^{16}$, $R^{17}$ oder $R^{18}$ für eine Aralkylgruppe steht, ist diese Gruppierung insbesondere eine über Methylen gebundene aromatische Gruppe, insbesondere eine Benzylgruppe.

Falls $R^5$, $R^6$, $R^7$, $R^8$, $R^9$, $R^{9'}$ oder $R^{10}$ für eine Alkylarylgruppe steht, ist diese insbesondere eine über Phenylen gebundene $C_1$- bis $C_{20}$-Alkylgruppe, wie beispielsweise Tolyl oder Xylyl.

Besonders bevorzugte Reste $Y^2$ sind Reste, welche ausgewählt sind aus der Gruppe bestehend aus

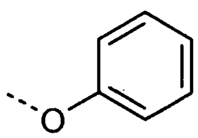,
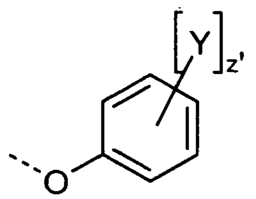,
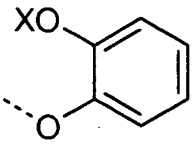,
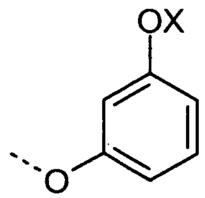,
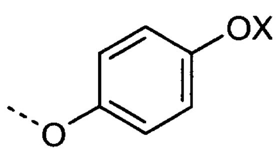,
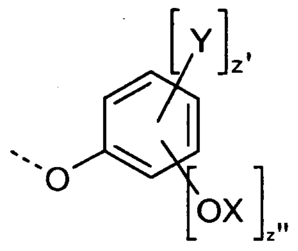,
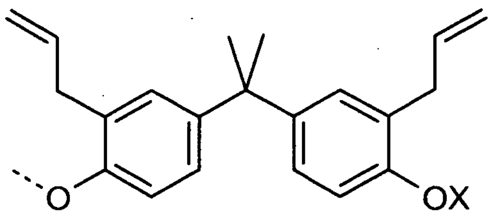,
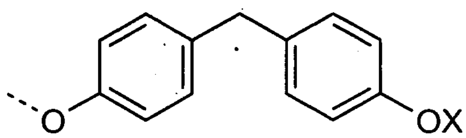 und 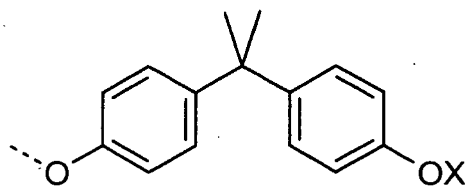.

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter $C_{15}$-Alkylrest mit 1 bis 3 Doppelbindungen bevorzugt.

Der Rest X steht für H oder für einen Alkyl-, Aryl-, Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (II) erfolgt aus dem Isocyanatgruppen terminierten linearen oder verzweigten Polyurethanpolymeren **PU1** mit einer oder mehreren Isocyanat-reaktiven Verbindungen $Y^2H$ und oder $Y^3H$. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen $Y^2H$ und/ oder $Y^3H$ stöchiometrisch oder im stöchiometrischen Überschuss eingesetzt werden, um zu gewährleisten, dass alle NCO-Gruppen umgesetzt sind.

Die Isocyanat-reaktiven Verbindungen $Y^3H$ ist eine Monohydroxyl-Epoxidverbindung der Formel (IIIa).

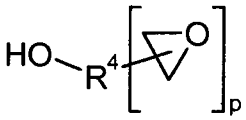

(IIIa)

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IIIa) weist 1, 2 oder 3 Epoxidgruppen auf. Die Hydroxylgruppe dieser Monohydroxyl-Epoxidverbindung (IIIa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IIIb), der in handelsüblichen flüssigen Epoxidharzen, hergestellt aus Bisphenol-A ($R = CH_3$) und Epichlorhydrin, zu etwa 15 % enthalten ist, sowie die entsprechenden β-Hydroxyether der Formel (IIIb), die bei der Reaktion von Bisphenol-F (R = H) oder des Gemisches von Bisphenol-A und Bisphenol-F mit Epichlorhydrin gebildet werden.

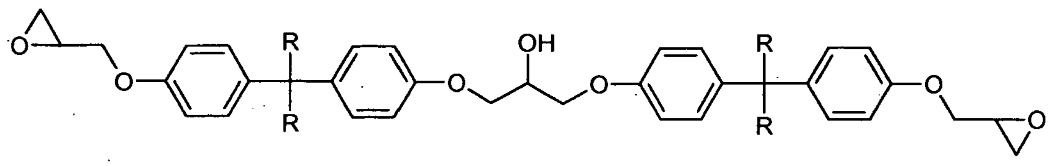

(IIIb)

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest $R^4$ ist insbesondere bevorzugt ein dreiwertiger Rest der Formel

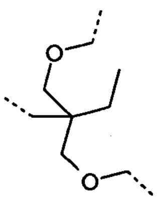

oder

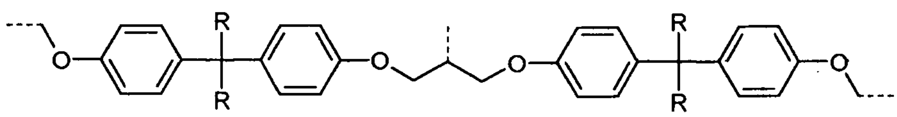

wobei R für Methyl oder H steht.

Die freie primäre oder sekundäre OH-Funktionalität der Monohydroxyl-Epoxidverbindung der Formel (IIIa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem $Y^1$ basiert, lässt sich aus mindestens einem Diisocyanat oder Triisocyanat sowie aus mindestens einem Polymeren $\mathbf{Q_{PM}}$ mit endständigen Amino-, Thiol- oder Hydroxylgruppen und /oder aus einem, gegebenenfalls substituierten, Polyphenol $\mathbf{Q_{PP}}$ herstellen.

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat ($H_{12}$MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere $\mathbf{Q_{PM}}$ mit endständigen Amino-, Thiol- oder Hydroxylgruppen sind insbesondere Polymere $\mathbf{Q_{PM}}$ mit zwei oder drei endständigen Amino-, Thiol- oder Hydroxylgruppen geeignet.

Die Polymere $\mathbf{Q_{PM}}$ weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere $\mathbf{Q_{PM}}$ geeignet sind Polyole, beispielsweise die folgenden handelsüblichen Polyole oder beliebige Mischungen davon:

- Polyoxyalkylenpolyole, auch Polyetherpolyole genannt, welche das Polymerisationsprodukt von Ethylenoxid, 1,2-Propylenoxid, Oxetan, 1,2-oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und - triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere $\mathbf{Q_{PM}}$ di- oder höherfunktioneller Polyole mit OH-Equivalentsgewichten von 300 bis 6'000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Im Weiteren können als Polymere $\mathbf{Q_{PM}}$ auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hycar® ATBN von Nanoresins AG, Deutschland vertrieben werden, sowie weitere aminoterminierte synthetische Kautschuke oder Gemische der genannte Komponenten verwendet werden.

Für gewisse Anwendungen sind als Polymere $\mathbf{Q_{PM}}$ insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere $\mathbf{Q_{PM}}$ auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (A) oder (B)

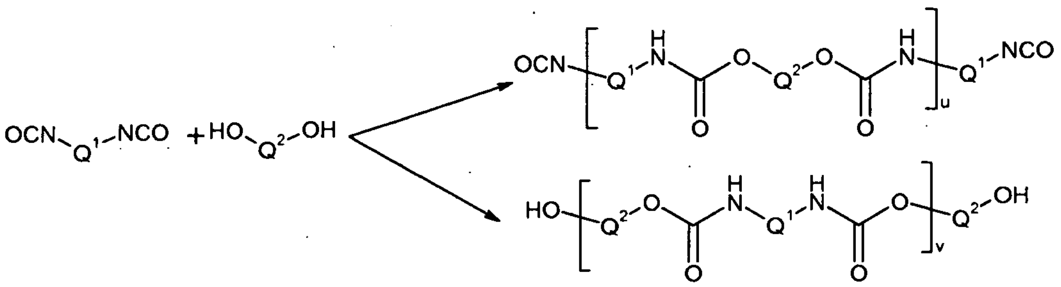

(A)

(B)

Die Reste $Q^1$ und $Q^2$ stellen einen divalenten organischen Rest dar und die Indizes u und v variieren je nach Stöchiometrieverhältnis von 1 bis typischerweise 5.

Diese Spezies der Formel (A) oder (B) können dann wiederum weiterreagiert werden. So kann beispielsweise aus der Spezies der Formel (A) und einem Diol mit einem divalenten organischen Rest $Q^3$ ein kettenverlängertes Polyurethanpolymer **PU1** der folgenden Formel gebildet werden:

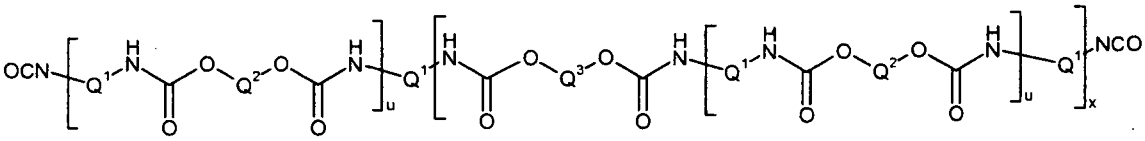

Aus der Spezies der Formel (B) und einem Diisocyanat mit einem divalenten organischen Rest $Q^4$ kann ein kettenverlängertes Polyurethanpolymer **PU1** der folgenden Formel gebildet werden:

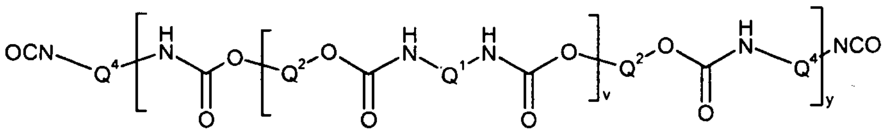

Die Indizes x und y variieren je nach Stöchiometrieverhältnis von 1 bis typischerweise 5, und sind insbesondere 1 oder 2.

Weiterhin kann auch die Spezies der Formel (A) mit der Spezies der Formel (B) umgesetzt werden, so dass ein NCO Gruppen aufweisendes kettenverlängertes Polyurethanpolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanpolymeren **PU1** generell und bei den kettenverlängerten Polyurethanpolymeren im Speziellen ist vorteilhaft darauf zu achten, dass die Polymere nicht zu hohe Viskositäten aufweisen, insbesondere wenn höher funktionelle Verbindungen für die Kettenverlängerung eingesetzt werden, denn dies kann deren Umsetzung zu

den Polymeren der Formel (II), beziehungsweise die Applikation der Zusammensetzung, erschweren.

Als Polymere $\mathbf{Q_{PM}}$ bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere $\mathbf{Q_{PM}}$ sind insbesondere bevorzugt $\alpha,\omega$-Dihydroxypolyalkylenglykole mit $C_2$-$C_6$-Alkylengruppen oder mit gemischten $C_2$-$C_6$- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol $\mathbf{Q_{PP}}$ sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanpolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis (4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

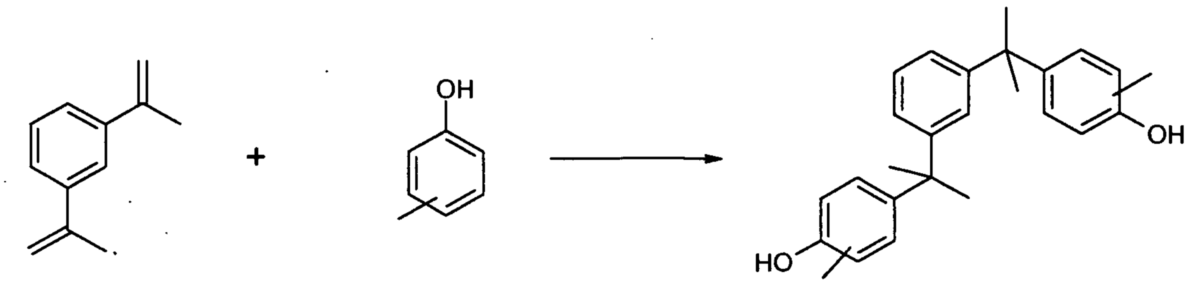

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das $\mathbf{Q_{PP}}$ 2 oder 3 phenolische Gruppen auf.

In einer ersten Ausführungsform wird das Polyurethanpolymer **PU1** aus mindestens einem Diisocyanat oder Triisocyanat sowie aus einem Polymeren $\mathbf{Q_{PM}}$ mit endständigen Amino-, Thiol- oder Hydroxylgruppen hergestellt. Die Herstellung des Polyurethanpolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren $\mathbf{Q_{PM}}$ eingesetzt wird.

In einer zweiten Ausführungsform wird das Polyurethanpolymer **PU1** aus mindestens einem Diisocyanat oder Triisocyanat sowie aus einem, gegebenenfalls substituierten, Polyphenol $\mathbf{Q_{PP}}$ hergestellt. Die Herstellung des Polyurethanpolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols $\mathbf{Q_{PP}}$ eingesetzt wird.

In einer dritten Ausführungsform wird das Polyurethanpolymer **PU1** aus mindestens einem Diisocyanat oder Triisocyanat sowie aus einem Polymeren $\mathbf{Q_{PM}}$ mit endständigen Amino-, Thiol- oder Hydroxylgruppen sowie aus einem, gegebenenfalls substituierten, Polyphenol $\mathbf{Q_{PP}}$ hergestellt. Zur Herstellung des Polyurethanpolymers **PU1** aus mindestens einem Diisocyanat oder Triisocyanat sowie aus einem Polymeren $\mathbf{Q_{PM}}$ mit endständigen Amino-, Thiol- oder Hydroxylgruppen und / oder aus einem, gegebenenfalls substituierten, Polyphenol $\mathbf{Q_{PP}}$ stehen unterschiedliche Möglichkeiten zur Verfügung.

In einem ersten Verfahren, "Eintopfverfahren" genannt, wird eine Mischung von mindestens einem Polyphenol $\mathbf{Q_{PP}}$ und mindestens einem Polymeren $\mathbf{Q_{PM}}$ mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol $\mathbf{Q_{PP}}$ mit mindestens einem Diisocyanat oder Triisocyanat in einem Isocyanatüberschuss und anschliessend mit mindestens einem Polymeren $\mathbf{Q_{PM}}$ in Unterschuss umgesetzt.

Im dritten Verfahren schliesslich, "2-Schrittverfahren II" genannt, wird mindestens ein Polymer $\mathbf{Q_{PM}}$ mit mindestens einem Diisocyanat oder Triisocyanat in einem Isocyanatüberschuss und anschliessend mit mindestens einem Polyphenol $\mathbf{Q_{PP}}$ in Unterschuss umgesetzt.

Die drei Verfahren führen zu Isocyanat-terminierten Polyurethanpolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanpolymeren **PU1** aus difunktionellen Komponenten aufgebaut, zeigte sich, dass das Equivalenz-Verhältnis Polymer $\mathbf{Q_{PM}}$/Polyphenol $\mathbf{Q_{PP}}$ bevorzugt grösser als 1.50 und das Equivalenz-Verhältnis Polyisocyanat/(Polyphenol $\mathbf{Q_{PP}}$ + Polymer $\mathbf{Q_{PM}}$) bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer $\mathbf{Q_{PM}}$, das Polyphenol $\mathbf{Q_{PP}}$**,** das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanpolymer **PU1** weist bevorzugt elastischen Charakter auf und zeigt eine Glasumwandlungstemperatur Tg von kleiner als 0°C.

Das endständig blockierte Polyurethanpolymer der Formel (II) weist vorteilhaft einen elastischen Charakter auf und ist weiterhin vorteilhaft in Epoxid-Flüssigharzen löslich oder dispergierbar.

Besonders bevorzugt ist der Formel (II) m verschieden von 0.

Besonders bevorzugt werden gleichzeitig mehrere Zähigkeitsverbesserer D als Bestandteil der hitzehärtenden Epoxidharzzusammensetzung. Besonderes bevorzugt enthält die hitzehärtende Epoxidharzzusammensetzung mindestens ein blockiertes Polyurethanpolymer der Formel (II) sowie mindestens ein Core-Shell-Polymer und/oder mit ein Carboxyl- oder (Meth)acrylat-oder Epoxid-Gruppen terminiertes Acrylnitril/Butadien-Copolymer oder ein Derivat davon.

Der Anteil des Zähigkeitsverbesserers **D** beträgt vorteilhaft 0.1 - 50 Gew.-%, insbesondere 0.5 - 30 Gew.-%, am Gewicht der Zusammensetzung.

In einer weiteren bevorzugten Ausführungsform enthält die Zusammensetzung zusätzlich mindestens einen Füllstoff **F.** Bevorzugt handelt es sich hierbei um Russ, Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 2 - 50 Gewichts-%, vorzugsweise 3 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein chemisches Treibmittel **H,** wie es beispielsweise unter dem Handelsnamen Expancel™ der Firma Akzo Nobel oder Celogen™ der Firma Chemtura oder Luvopor™ der Firma Lehmann & Voss, Deutschland, erhältlich ist. Der Anteil des Treibmittels **H** beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:

- Glycidylether von monofunktionellen gesättigten oder ungesättigten, verzweigten oder unverzweigten, zyklischen oder offenkettigen $C_4$ - $C_{30}$ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen $C_2$ - $C_{30}$ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.

- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert.*-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 0.5 - 8 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Es hat sich gezeigt, dass es vorteilhaft ist, dass die hitzehärtende Epoxidharzzusammensetzung frei von organischen Carbonsäuren ist.

Es hat sich gezeigt, dass sich die erfindungsgemässen hitzehärtenden Epoxidharzzusammensetzungen besonders als einkomponentige Klebstoffe verwendet werden können. Somit betrifft die Erfindung in einem weiteren Aspekt eine Verwendung der vorgängig beschriebenen hitzehärtenden Epoxidharzzusammensetzung als einkomponentigen hitzehärtenden Klebstoff, insbesondere als hitzehärtender einkomponentiger Rohbauklebstoff im Fahrzeugbau. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Schlagzähigkeit mit guter Lagerstabilität und mit tiefen Härtungstemperaturen zu erreichen. Zusätzlich hierzu weist die Zusammensetzung hohe mechanische Werte auf. Insbesondere hat sich gezeigt, dass Glasübergangstemperaturen von über 85°C, insbesondere von 100°C oder höher, erreicht werden können, was insbesondere wichtig ist für Anwendungen mit hohen Arbeitstemperaturen.

Ein weiterer Aspekt der Erfindung betrifft somit ein Verfahren zum Verkleben von hitzestabilen Materialien, bei welchem diese Materialien mit einer vorgängig beschriebenen Epoxidharzzusammensetzung kontaktiert werden und welches einen oder mehrere Schritte des Aushärtens bei einer Temperatur von 100 - 220 °C, vorzugsweise 120 - 200°C umfasst. Ein derartiger Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Es hat sich insbesondere gezeigt, dass die hitzehärtenden Epoxidharzzusammensetzung sich auch bei sogenannten Unterbrandbedingungen aushärten lassen, d.h. die Zusammensetzung erreicht bereits bei Temperaturen von unter 170°C gute mechanische Aushärtungseigenschaften. Es hat sich beispielsweise gezeigt, dass es mit derartigen Zusammensetzungen möglich ist, durch eine Erhitzung von 10 Minuten bei bereits 165°C, insbesondere 160°C, schon Werte von Zugscherfestigkeiten (für Details der Messung sei hier auf die Bespiele verwiesen) von über 15 MPa, insbesondere von über 19 MPa, zu erhalten und dass diese Werte sich nur geringfügig von den bei 30 Minuten bei 180°C gehärteten Werten unterscheiden.

Nach der Verklebung können die verklebten Materialien bei Temperaturen zwischen 120°C und -40°C, vorzugsweise zwischen 110°C und -40°C, insbesondere zwischen 100°C und -40°C, eingesetzt werden.

Aus einem derartigen Verfahren zum Verkleben von hitzestabilen Materialien resultiert ein verklebter Artikel, was einen weiteren Aspekt der vorliegenden Erfindung darstellt. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die beschriebenen hitzehärtenden Epoxidharzzusammensetzungen zeigen exzellente mechanische Eigenschaften, insbesondere hohe Zugfestigkeiten und hohe Schlagzähigkeit, weisen zudem ausgezeichnete Lagerstabilität, auch bei längerer Dauer bei höheren Temperaturen auf und weisen dennoch eine hervorragende Aushärtung bei Temperaturen von 170°C bis 150°C, insbesondere zwischen 170°C und 160°C, auf.

Es lassen sich weiterhin Klebstoffe erhalten, welche über eine hohe Glasübergangstemperatur, typischerweise von grösser 95°C, verfügen.

Es lassen sich Zusammensetzungen formulieren, welche typischerweise Bruchenergien, gemessen nach ISO 11343, von mehr als 40 J, zuweilen mehr als 43 J, bei 23°C aufweisen.

Eine besonders bevorzugte Anwendung der erfindungsgemässen hitzehärtenden Epoxidharzzusammensetzung ist die Anwendung als hitzehärtender Rohbauklebstoff im Fahrzeugbau.

Es hat sich weiterhin gezeigt, dass die beschriebenen hitzehärtenden Epoxidharzzusammensetzungen zur Herstellung eines Strukturschaums für die Verstärkung von Hohlräumen, insbesondere von metallischen Strukturen, verwendet werden können. In diesen Fällen weist die Zusammensetzung ein chemisches Treibmittel **H** auf.

Beim Erhitzen wird einerseits durch das chemische Treibmittel ein Gas entwickelt, so dass sich zusammen mit der Zusammensetzung ein Schaum bildet und andererseits härtet die Epoxidharzzusammensetzungen aus.

Durch ein zumindest partielles Verfüllen eines Hohlraumes mit einer derartigen hitzehärtenden Zusammensetzung und Erhitzen der verklebten Materialien auf eine Temperatur von 100-220 °C, vorzugsweise 120-200°C, wird ein geschäumter Artikel erhalten.

Insbesondere wird dadurch ein Fahrzeug oder Fahrzeugteil erhalten, welcher einen so geschäumten Artikel enthält.

Völlig überraschend hat sich weiterhin gezeigt, dass die Verwendung eines wie vorgängig beschriebenen Beschleunigers der Formel (Ia) oder (Ib) zur Erhöhung der Schlagzähigkeit von hitzehärtenden Epoxidharzzusammensetzungen führt. Dies ist besonders auch in hitzehärtenden Epoxidharzzusammensetzungen der Fall, welche bereits über ein sehr hohes Niveau an Schlagzähigkeit verfügen. So konnten beispielsweise hitzehärtenden Epoxidharzzusammensetzungen, die bereits eine Schlagschälarbeit von ca. 14 J gemessen nach ISO 11343 bei 25°C aufweisen, um mehr als 15%, in einigen Fällen sogar mehr als 23% erhöht werden.

Dies ist besonders erstaunlich, da nämlich aliphatische Beschleuniger, welche über sehr ähnliche Strukturen, zuweilen sogar mit gleicher Summenformel, verfügen, diesen Effekt nicht aufweisen. Aromatische, nicht der Formel (Ia) oder (Ib) entsprechende, Beschleuniger, wie beispielsweise 3,3'-(4-Methyl-1,3-phenylen)bis (1,1-Dimethylharnstoff), zeigen diesen Effekt nicht in dem Ausmass, wie die Beschleunigers der Formel (Ia) oder (Ib), und führen zudem zu einer Verschlechterung der Lagerstabilität.

**Beispiele**

Härter für Epoxyidharze

N,N-Dimethylharnstoff (=1,1-Dimethylharnstoff)("**asym *DMH***")

n= 1, $R^1$=H, $R^2$=$R^3$=$CH_3$

N,N-Dimethylharnstoff wurde bei Aldrich, Schweiz, bezogen.

N',N'-Dimethyl-N-Butylharnstoff (=3-Butyl-1,1-Dimethylharnstoff)("***BuDMH***")

n = 1, $R^1$ = n-Butyl, $R^2$ = $R^3$ = $CH_3$

Es wurden 50ml Tetrahydrofuran (THF) und 20.0g einer ca. 33%igen Dimethylaminlösung in Ethanol (Fluka) (ca. 146 mmol Amin) in einen 100ml Zweihalskolben mit Rückflusskühler eingewogen. Anschliessend wurden während 30 Minuten langsam 14.5g Butylisocyanat (Fluka) (ca. 146 mmol NCO) zugetropft, wobei eine leichte Exothermie beobachtet wurde. Nach 3 Stunden Rühren bei Umgebungstemperatur wurde das Lösemittel am Rotationsverdampfer bei 80°C unter Vakuum abgezogen. Es wurden ca. 21.0g einer leicht gelblichen, niederviskosen Flüssigkeit erhalten. Das gewünschte Addukt wurde ohne weitere Reinigung weiter verwendet.

Hexamethylenbis(1,1-Dimethylharnstoff)(=1,1'-(Hexan-1,6-diyl)bis(3,3-Dimethylharnstoff) **("*HDIDMH*")**

n = 2, $R^1 = -(CH_2)_6-$, $R^2 = R^3 = CH_3$

Es wurden 50ml THF und 20.0g einer ca. 33%igen Dimethylaminlösung in Ethanol (Fluka) (ca. 146 mmol Amin) in einen 100ml Zweihalskolben mit Rückflusskühler eingewogen. Anschliessend wurden während 30 Minuten langsam 10.0g Hexamethylendisocyanat (Fluka) (ca. 119 mmol NCO) zugetropft, wobei eine leichte Exothermie beobachtet wurde und sofort ein weisser Festkörper ausfiel. Nach 2 Stunden Rühren bei Umgebungstemperatur wurde die Suspension filtriert. Es wurde 3x mit jeweils 20ml THF gewaschen. Das erhaltene Rohprodukt wurde 3h bei 80°C unter Vakuum getrocknet. Das gewünschte Produkt wurde in Form von 12.3g eines weissen Pulvers erhalten.

Addukt Desmodur N-100 mit Dimethylharnstoff **("*N100DMH*")**

n = 3, $R^1$ = Formel (IX), $R^2 = R^3 = CH_3$

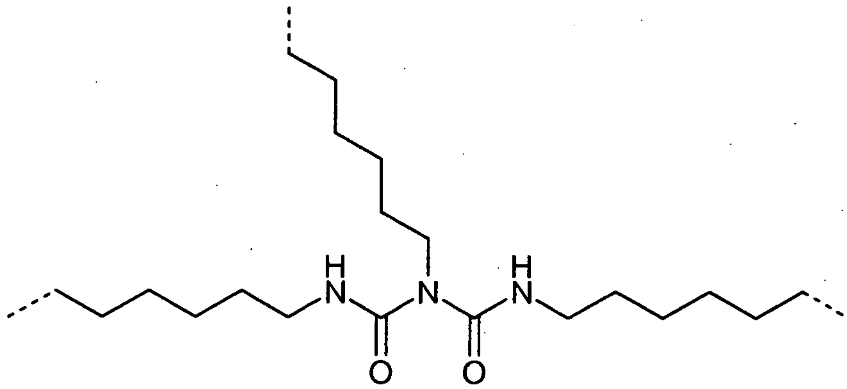

(IX)

Es wurden 30ml THF und 20.0g einer ca. 33%igen Dimethylaminlösung in Ethanol (Fluka) (ca. 146 mmol Amin) in einen 100ml Zweihalskolben mit Rückflusskühler eingewogen. Anschliessend wurden während 30 Minuten langsam 18.7g Hexamethylendiisocyanat-Trimer Desmodur N-100 (Bayer) (ca. 118 mmol NCO) in 20ml THF zugetropft, wobei eine leichte Exothermie beobachtet wurde. Nach 2 Stunden Rühren bei Umgebungstemperatur wurden das Lösemittel sowie das überschüssige Dimethylamin zuerst bei 100°C unter Stickstoffstrom verdampft und in einer Gaswaschflasche mit saurem Wasser aufgefangen, anschiessend wurde am Rotationsverdampfer bei 80°C unter Vakuum weiter getrocknet. Nach dem Umgiessen aus dem Kolben wurden ca. 21.5g eines fast farblosen, hochviskosen Produktes erhalten. Das gewünschte Addukt wurde ohne weitere Reinigung weiter verwendet.

Benzyldimethylharnstoff **("*BzDMH*")**

n = 1, $R^1 = -(CH_2)-C_6H_5$, $R^2 = R^3 = CH_3$

15.0g (139.5 mmol) N,N-Dimethylcarbamoylchlorid und 80ml Dioxan wurden in einen 250ml Zweihalskolben mit Rückflusskühler gegeben. Anschliessend wurden 13.66g (135 mmol) Triethylamin sowie 14.89g (139 mmol) Benzylamin zugegeben. Nach dem Abklingen der Exothermie wurde die Mischung während 5h bei 90°C gerührt, wobei sich rasch eine leicht orange Suspension bildete. Die so erhaltene Suspension wurde heiss filtriert. Die beim Abkühlen der Lösung entstandene Trübung wurde durch nochmaliges Filtrieren entfernt. Das Lösemittel wurde am Rotationsverdampfer bei 60°C abgezogen. Es wurden ca. 14.0 g eines leicht orangen, wachsartigen Festkörpers erhalten.

3,3'-(4-Methyl-1,3-phenylen)bis (1,1-Dimethylharnstoff) **("*TDIDMH*")**

n = 2, $R^1$ = Formel (X), $R^2 = R^3 = CH_3$

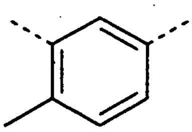

(X)

3,3'-(4-Methyl-1,3-phenylen)bis (1,1-Dimethylharnstofi) wurde bei Fluka, Schweiz, bezogen.

N,N'-Dimethylharnstoff =1 3-Dimethylharnstoff)("***sym DMH***")

n = 1, $R^1 = CH_3$, $R^2 = H$, $R^3 = CH_3$

N,N'-Dimethylharnstoff wurde bei Fluka, Schweiz, bezogen.
N,N,N',N'-Tetramethylharnstoff (=1,1,3,3-Tetramethylharnstoff)("**TMH**")

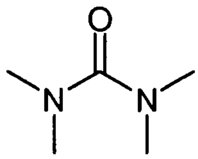

N,N,N',N'-Tetramethylharnstoff wurde bei Fluka, Schweiz, bezogen.

Tabelle1. Eingesetzte Rohstoffe.

| | |
|---|---|
| D.E.R. 330 (Bisphenol-A-diglycidylether = "*DGEBA*") | Dow |
| Polypox R7 (tert-Butylphenyl-glycidylether) = "*Polypox*") | UPPC |
| Polydis 3614, Epoxidharz-modifiziertes CTBN (= "*Polydis*") | Struktol |
| Dicyandiamid (= "*Dicy*") | Degussa |
| Poly-THF 2000 (Difunktionelles Polybutylenglykol) (OH-Equivalentgewicht = ca. 1000 g/OH-Equivalent) | BASF |
| Liquiflex H (Hydroxylterminertes Polybutadien) (OH-Equivalentgewicht = ca. 1230 g/OH-Equivalent) | Krahn |
| Isophoron-düsocyanat (= "*IPDI*") | Evonik |
| Cardolite NC-700 (Cardanol, meta-substituiertes Alkenyl-mono-Phenol) | Cardolite |

Herstellung eines Zähigkeitsverbesserers **("*D-1*")**

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt, bis der NCO-Gehalt nach 3.5h unter 0.1% gesunken war. Das Produkt wurde so als Zähigkeitsverbesserer ***D-1*** verwendet.

*Herstellung der Zusammensetzungen*

Es wurden gemäss Angaben in Tabelle 2 die Referenzzusammensetzungen ***Ref.1*** - ***Ref***. ***4*** sowie die erfindungsgemässen Zusammensetzungen ***1, 2, 3, 4*** und 5 hergestellt.
In den Referenzbeispielen sind jeweils kein (Ref.1) bzw. Bescheleuniger, welcher nicht der Formel (Ia) entsprechen, eingesetzt, während dies bei den Beispielen ***1, 2, 3, 4*** und ***5*** der Fall war. Die Menge der eingesetzten Beschleuniger wurden derart berechnet, dass die Gesamtkonzentration an Harnstoffgruppen konstant war.

**Prüfmethoden:**

*Zugscherfestigkeit (ZSF) (DIN EN 1465)*

Die Probekörper wurden aus den beschriebenen Zusammensetzungen und mit elektrolytisch verzinktem DC04 Stahl (eloZn) mit dem Mass 100 x 25 x 0.8 mm hergestellt, dabei betrug die Klebfläche 25 x 10mm bei einer Schichtdicke von 0.3 mm. Gehärtet wurde während 30 Min. bei 180°C ("$ZSF_{180}$"), bzw. während 10 Min. bei 165°C ("$ZSF_{165}$") in einem Umluftofen. Die Messung erfolgte nach dem Abkühlen auf Raumtemperatur nach einem Tag bei einer Zuggeschwindigkeit von 10mm/min.

*Schlagschälarbeit (ISO 11343)*

Die Probekörper wurden aus den beschriebenen Zusammensetzungen und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3mm. Gehärtet wurde 30 Min. bei 180°C. Die Messung der Schlagschälarbeit erfolgte jeweils bei 23°C. Die Schlaggeschwindigkeit betrug 2 m/s. Als Bruchenergie ("BE") in Joule wird die Fläche unter der Messkurve (von 25% bis 90%, gemäss ISO 11343) angegeben.

Als Erhöhung Schlagzähigkeit gegenüber dem Referenzbeispiel ***Ref.1*** wurde in Tabelle der Wert "$\Delta_{BE}$" gemäss der folgenden Formel bestimmt:

$$\Delta_{BE} = [BE/BE(\textbf{\textit{Ref.1}})]-1.$$

*Viskosität*

Die Klebstoffproben wurde auf einem Viskosimeter Bohlin CVO 120, Platte/Platte (Durchmesser 25mm, Spaltmass 1 mm), Frequenz 5 Hz, 0.01 Auslenkung, Temperatur 23 - 53°C, 10°C/min, gemessen. Die Viskosität wurde hierbei als komplexe Viskosität bei 25°C aus der gemessenen Kurve heraus ermittelt.

Die Klebstoffe wurden nach der Herstellung während 1 Tag bei 25°C, bzw. während 1 Woche bei 60°C, gelagert. Nach dem Erkalten auf Raumtemperatur wurde die Viskosität gemessen und als "Visk (1d, 25°C)", bzw. als "Visk (1w, 60°C)" in Tabelle 2 angegeben. Viskositätszunahme ($\Delta_{visk}$) wurde berechnet gemäss der Formel

$$[\text{Visk (1w, 60°C)/ Visk (1d, 25°C)}]-1.$$

Die Ergebnisse dieser Prüfungen sind in Tabelle 2 zusammengestellt.

Tabelle2. Zusammensetzungen und Resultate. [1]GT= Gewichtsteile [2].n.m.=nicht messbar

| | ***Ref.1*** | ***Ref.2*** | ***Ref.3*** | ***Ref.4*** | ***1*** | ***2*** | ***3*** | ***4*** | ***5*** |
|---|---|---|---|---|---|---|---|---|---|
| *DGEBA* [GT[1]] | 40.0 | 40.0 | 40.0 | 40.0 | 40.0 | 40.0 | 40.0 | 40.0 | 40.0 |
| *Polypox* [GT[1]] | 3.0 | 3.0 | 3.0 | 3.0 | 3.0 | 3.0 | 3.0 | 3.0 | 3.0 |
| *Polydis* [GT[1]] | 15.0 | 15.0 | 15.0 | 15.0 | 15.0 | 15.0 | 15.0 | 15.0 | 15.0 |
| ***D-1*** [GT[1]] | 15.0 | 15.0 | 15.0 | 15.0 | 15.0 | 15.0 | 15.0 | 15.0 | 15.0 |
| *Dicy* [GT[1]] | 4.01 | 4.01 | 4.01 | 4.01 | 4.01 | 4.01 | 4.01 | 4.01 | 4.01 |
| ***TDIDMH*** [GT[1]] | | 0.51 | | | | | | | |
| ***TMH*** [GT[1]] | | | 0.45 | | | | | | |
| ***sym-DMH*** [GT[1]] | | | | 0.34 | | | | | |
| ***asym-DMH*** [GT[1]] | | | | | 0.34 | | | | |
| ***BuDMH*** [GT[1]] | | | | | | 0.56 | | | |
| ***HDIDMH*** [GT[1]] | | | | | | | 0.50 | | |
| ***N100DMH*** [GT[1]] | | | | | | | | 0.79 | |

(fortgesetzt)

| | ***Ref.1*** | ***Ref.2*** | ***Ref.3*** | ***Ref.4*** | ***1*** | ***2*** | ***3*** | ***4*** | ***5*** |
|---|---|---|---|---|---|---|---|---|---|
| ***BzDMH*** [GT[1]] | | | | | | | | | 0.69 |
| Füllstoffmischung [GT1] | 19.0 | 19.0 | 19.0 | 19.0 | 19.0 | 19.0 | 19.0 | 19.0 | 19.0 |
| | | | | | | | | | |
| $ZSF_{180}$ [MPa] | 21.4 | 21.7 | 21.4 | 21.7 | 21.7 | 22.2 | 22.0 | 21.8 | 22.4 |
| $ZSF_{165}$ [MPa] | n.m.[2] | 20.1 | n.m.[2] | n.m.[2] | 19.8 | 21.2 | 21.1 | 21.0 | 21.1 |
| BE [J] | 14.2 | 16.1 | 13.9 | 14.4 | 16.5 | 17.5 | 17.4 | 16.3 | 17.3 |
| $\Delta_{BE}$ [%] | | 13 | -2 | 1 | 16 | 23 | 23 | 15 | 22 |
| Visk (1d, 25°C) [mPas] | 395 | 350 | 345 | 360 | 255 | 310 | 360 | 320 | 335 |
| Visk (1w, 60°C)[mPas] | 395 | 1340 | 420 | 455 | 305 | 325 | 370 | 335 | 405 |
| $\Delta_{visk}$ [%] | | 283 | 22 | 26 | 20 | 5 | 3 | 5 | 21 |

Die Beispiele ***Ref.1***, ***Ref.3*** und ***Ref.4*** zeigen derart ungenügende Aushärtung bei 165°C, dass die Probekörper bereits beim Entfernen der Fixierklammern nach dem Herausnehmen aus dem Ofen auseinander fielen, so dass keine Zugscherfestigkeit gemessen werden konnte. In diesen Fällen war der Klebstoff auch nach dem Abkühlen auf Raumtemperatur noch niederviskos. ***Ref. 2***, welches auf einem Harnstoff mit aromatischen Resten beruht, zeigt zwar bereits bei 165°C ein gutes Aushärtungsverhalten, weist aber eine sehr geringe Lagerstabilität auf.

Die erfindungsgemässen Bespiele ***1, 2, 3, 4*** und ***5*** zeigen gute mechanische Werte bereits nach Aushärtung bei 165°C sowie gute Lagerstabilität.

Weiterhin ist aus dem Vergleich von den Beispielen ***Ref.1*** mit ***Ref.4*** bzw. ***1,*** ersichtlich, dass bei der Verwendung von Beschleunigern gemäss Formel (Ia) bei Klebstoffen, welche bereits eine hohe Mass an Schlagzähigkeit aufweisen, die Schlagzähigkeit nochmals stark verbessert werden kann, während dies bei den entsprechenden, nicht der Formel (Ia) entsprechenden, aliphatischen Beschleunigern, nicht der Fall ist. Bei den aromatischen Beschleunigern **(*Ref.2*)** konnte zwar ebenfalls eine derartige Erhöhung der Schlagzähigkeit gefunden werden, allerdings nicht in demselben Ausmass.

## Patentansprüche

1. Hitzehärtende Epoxidharzzusammensetzung umfassend

   a) mindestens ein Epoxidharz **A** mit durchschnittlich mehr als einer Epoxidgruppe pro Molekül;
   b) mindestens einen Härter **B** für Epoxidharze, welcher durch erhöhte Temperatur aktiviert wird und ein Amin, Amid, Carbonsäureanhydrid oder Polyphenol ist; und
   c) mindestens einen Beschleuniger **C** der Formel (Ia) oder (Ib)

   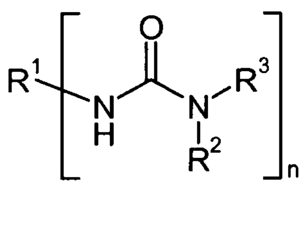 (Ia) 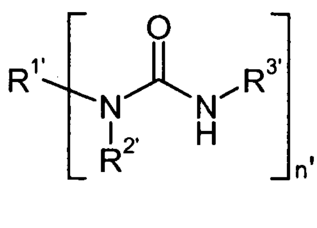 (Ib)

   wobei $R^1$ für H oder einen n-wertigen aliphatischen, cycloaliphatischen oder araliphatischen Rest steht;

   $R^2$ und $R^3$
   entweder
   je unabhängig von einander für eine Alkylgruppe oder Aralkylgruppe stehen;
   oder
   zusammen für einen zweiwertigen aliphatischen Rest mit 3 bis 20 C-Atomen, der Teil eines, gegebenenfalls

substituierten, heterocyclischen Rings mit 5 bis 8, bevorzugt 6, Ringatomen ist, stehen;
$R^{1'}$ für einen n'-wertigen aliphatischen, cycloaliphatischen oder araliphatischen Rest steht;
$R^{2'}$ für eine Alkylgruppe oder Aralkylgruppe oder Alkylengruppe steht;
$R^{3'}$ unabhängig von einander für H oder eine Alkylgruppe oder Aralkylgruppe steht; und
n und n' je für einen Wert von 1 bis 4, insbesondere für 1 oder 2, steht sowie

d) mindestens einen Zähigkeitsverbesserer **D.**

2. Hitzehärtende Epoxidharzzusammensetzung gemäss Anspruch 1, **dadurch gekennzeichnet, dass** n = 1 oder 2 ist.

3. Hitzehärtende Epoxidharzzusammensetzung gemäss Anspruch 1 oder 2, **dadurch gekennzeichnet, dass** $R^1$ für H steht und $R^2$ und $R^3$ je für eine Methyl-, Ethyl- oder Propylgruppe, bevorzugt je für eine Methylgruppe, stehen.

4. Hitzehärtende Epoxidharzzusammensetzung gemäss Anspruch 1 oder 2, **dadurch gekennzeichnet, dass** $R^1$ entweder
für eine Alkylengruppe mit 4 bis 10 Kohlenstoffatomen, insbesondere für eine Hexamethylengruppe, steht;
oder für

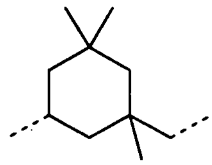

oder
für ein Biuret oder ein Isocyanurat eines aliphatischen oder araliphatischen Diisocyanates, nach Entfernung der Isocyanatgruppen steht;
oder
für eine Xylylengruppe, insbesondere für eine m-Xylylengruppe, steht.

5. Hitzehärtende Epoxidharzzusammensetzung gemäss einem der vorhergehenden Ansprüche, **dadurch gekennzeichnet, dass** der Härter **B** ausgewählt ist aus der Gruppe bestehend aus Diaminodiphenolsulfon, Adipinsäuredihydrazid, Derivate von Trimellitsäureanhydrid ,Novolacke und Dicyandiamid, bevorzugt Dicyandiamid ist.

6. Hitzehärtende Epoxidharzzusammensetzung gemäss einem der vorhergehenden Ansprüche, **dadurch gekennzeichnet, dass** die hitzehärtende Epoxidharzzusammensetzung frei von organischen Carbonsäuren ist.

7. Hitzehärtende Epoxidharzzusammensetzung gemäss einem der vorhergehenden Ansprüche, **dadurch gekennzeichnet, dass** der Zähigkeitsverbesserer **D** ausgewählt ist aus der Gruppe bestehend aus blockierten Polyurethanpolymeren, Flüssigkautschuken, Epoxidharz-modifizierten Flüssigkautschuken und Core-Shell-Polymeren.

8. Hitzehärtende Epoxidharzzusammensetzung gemäss einem der vorhergehenden Ansprüche, **dadurch gekennzeichnet, dass** der Zähigkeitsverbesserer **D** ein Flüssigkautschuk ist, welcher ein Acrylonitil/Butadien-Copolymer ist, welches mit Carboxylgruppen oder (Meth)acrylatgruppen oder Epoxidgruppen terminiert ist, oder ein Derivat davon ist.

9. Hitzehärtende Epoxidharzzusammensetzung gemäss einem der vorhergehenden Ansprüche, **dadurch gekennzeichnet, dass** der Zähigkeitsverbesserer D ein blockiertes Polyurethanpolymer der Formel (II) ist

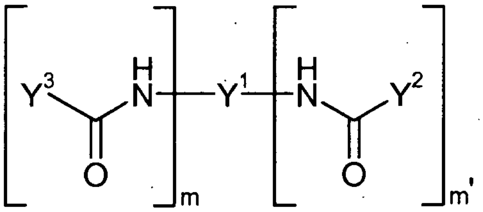

(II)

wobei

$Y^1$ für ein mit m+m' Isocyanatgruppen terminiertes lineares oder verzweigtes Polyurethanpolymer **PU1** nach dem Entfernen aller endständigen Isocyanatgruppen steht;
$Y^2$ unabhängig von einander für eine Blockierungsgruppe, welche sich bei einer Temperatur über 100°C abspaltet, steht;
$Y^3$ unabhängig von einander für eine Gruppe der Formel (II') steht

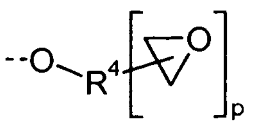

(II')

wobei $R^4$ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 und
m und m' je für Werte zwischen 0 und 8 stehen, mit der Massgabe, dass
m +m' für einen Wert von 2 bis 8 steht.

**10.** Hitzehärtende Epoxidharzzusammensetzung gemäss Anspruch 9, **dadurch gekennzeichnet, dass** $Y^2$ für einen Rest steht, welcher ausgewählt ist aus der Gruppe bestehend aus

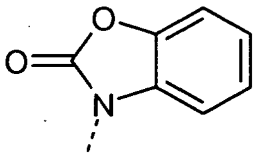
,
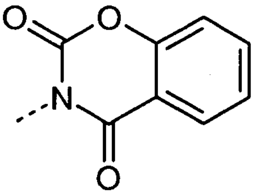
,
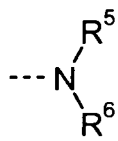
,
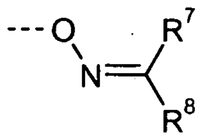
,

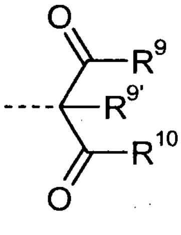
,
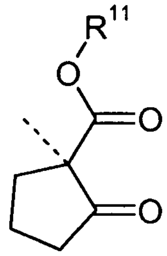
,
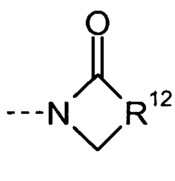
,
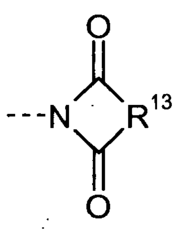
,

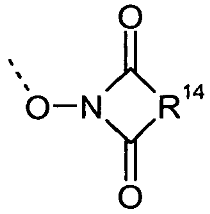,
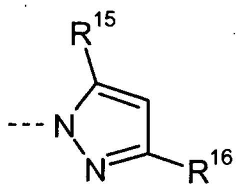,
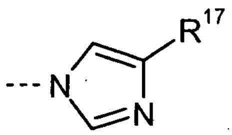,
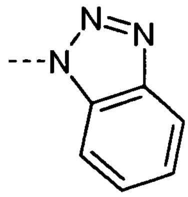,

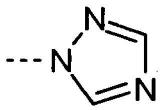,
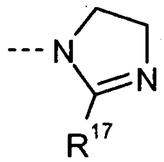
und
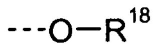;

wobei

$R^5$, $R^6$, $R^7$ und $R^8$ je unabhängig voneinander für eine Alkyl- oder Cycloalkyl- oder Aryl- oder Aralkyl- oder Arylalkyl-Gruppe steht
oder $R^5$ zusammen mit $R^6$, oder $R^7$ zusammen mit $R^8$, einen Teil eines 4- bis 7- gliedrigen Rings bilden, welcher allenfalls substituiert ist;
$R^9$, $R^{9'}$ und $R^{10}$ je unabhängig voneinander für eine Alkyl- oder Aralkyl-oder Aryl- oder Arylalkyl-Gruppe oder für eine Alkyloxy- oder Aryloxy-oder Aralkyloxy-Gruppe steht;
$R^{11}$ für eine Alkylgruppe steht,
$R^{12}$, $R^{13}$ und $R^{14}$ je unabhängig voneinander für eine Alkylengruppe mit 2 bis 5 C-Atomen, welche gegebenenfalls Doppelbindungen aufweist
oder substituiert ist, oder für eine Phenylengruppe oder für eine hydrierte Phenylengruppe stehen;
$R^{15}$, $R^{16}$ und $R^{17}$ je unabhängig voneinander für H oder für eine Alkylgruppe oder für eine Arylgruppe oder eine Aralkylgruppe stehen; und
$R^{18}$ für eine Aralkylgruppe oder für eine ein- oder mehrkernige substituierte oder unsubstituierte Aromatengruppe steht, welche gegebenenfalls aromatische Hydroxylgruppen aufweist.

**11.** Hitzehärtende Epoxidharzzusammensetzung gemäss Anspruch 9 oder 10, **dadurch gekennzeichnet, dass** m verschieden von 0 ist.

**12.** Hitzehärtende Epoxidharzzusammensetzung gemäss einem der vorhergehenden Ansprüche, **dadurch gekennzeichnet, dass** die Epoxidharzzusammensetzung mindestens ein chemisches Treibmittel, insbesondere in einer Menge von 0.1 - 3 Gew.-%, bezogen auf das Gewicht der Zusammensetzung, enthält.

**13.** Hitzehärtende Epoxidharzzusammensetzung gemäss einem der vorhergehenden Ansprüche, **dadurch gekennzeichnet, dass** der Anteil des Epoxidharzes **A** 10 - 85 Gew.-%, insbesondere 15 - 70 Gew.-%, bevorzugt 15 - 60 Gew.-%, am Gewicht der Zusammensetzung beträgt.

**14.** Hitzehärtende Epoxidharzzusammensetzung gemäss einem der vorhergehenden Ansprüche, **dadurch gekennzeichnet, dass** die Menge des Härters **B** für Epoxidharze, welcher durch erhöhte Temperatur aktiviert wird, 0.1 - 30 Gew.-%, insbesondere 0.2 - 10 Gew.-%, bezogen auf das Gewicht des Epoxidharzes **A** beträgt.

**15.** Hitzehärtende Epoxidharzzusammensetzung gemäss einem der vorhergehenden Ansprüche, **dadurch gekennzeichnet, dass** die Menge des Beschleunigers **C** 0.01 - 6.0 Gew.-%, insbesondere 0.02 - 4.0 Gew.-%, bevorzugt 0.02 - 2.0 Gew.-%, bezogen auf das Gewicht des Epoxidharzes **A** beträgt.

**16.** Hitzehärtende Epoxidharzzusammensetzung gemäss einem der vorhergehenden Ansprüche, **dadurch gekennzeichnet, dass** der Anteil des Zähigkeitsverbesserers **D** 0.1 - 50 Gew.-%, insbesondere 0.5 - 30 Gew.-%, am Gewicht der Zusammensetzung beträgt.

**17.** Verwendung einer hitzehärtenden Epoxidharzzusammensetzung gemäss einem der Ansprüche 1 bis 16 als einkomponentiger hitzehärtender Klebstoff, insbesondere als hitzehärtender einkomponentiger Rohbauklebstoff im

Fahrzeugbau.

**18.** Verwendung einer hitzehärtenden Epoxidharzzusammensetzung gemäss einem der Ansprüche 1 bis 16 zur Herstellung von Beschichtungen, insbesondere von Lacken.

**19.** Verwendung eines Beschleunigers der Formel (Ia) oder (Ib), wie er in einer hitzehärtenden Epoxidharzzusammensetzung gemäss einem der Ansprüche 1 bis 16 vorkommt, zur Erhöhung der Schlagzähigkeit von hitzehärtenden Epoxidharzzusammensetzungen.

**20.** Verfahren zum Verkleben von hitzestabilen Materialien, insbesondere von Metallen, **dadurch gekennzeichnet, dass** diese Materialien mit einer hitzehärtenden Epoxidharzzusammensetzung gemäss einem der Ansprüche 1 bis 16 kontaktiert werden und dass das Verfahren einen oder mehrere Schritte des Aushärtens bei einer Temperatur von 100 - 220 °C, vorzugsweise 120 - 200°C, umfasst.

**21.** Verfahren zum Verkleben gemäss Anspruch 20, **dadurch gekennzeichnet, dass** die Materialien mit einer hitzehärtenden Epoxidharzzusammensetzung gemäss einem der Ansprüche 1 bis 16 kontaktiert werden und dass nach der Verklebung die verklebten Materialien bei Temperaturen zwischen 120°C und -40°C, vorzugsweise zwischen 110°C und -40°C, insbesondere zwischen 100°C und -40°C, eingesetzt werden.

**22.** Verklebter Artikel, welcher durch ein Verfahren gemäss Anspruch 20 oder 21 erhalten wird.

**23.** Verklebter Artikel gemäss Anspruch 22, **dadurch gekennzeichnet, dass** der Artikel ein Fahrzeug oder ein Anbauteil eines Fahrzeugs ist.

**24.** Verwendung einer hitzehärtenden Epoxidharzzusammensetzung gemäss einem der Ansprüche 1-16 zur Herstellung eines Strukturschaums für die Verstärkung von Hohlräumen, insbesondere von metallischen Strukturen.

**25.** Geschäumter Artikel, welcher durch ein zumindest partielles Verfüllen eines Hohlraumes mit einer hitzehärtenden Zusammensetzung gemäss einem der Ansprüche 1 bis 16 und Erhitzen der verklebten Materialien auf eine Temperatur von 100-220 °C, vorzugsweise 120-200°C, erhalten wird.

**26.** Fahrzeug oder Fahrzeugteil enthaltend einen geschäumten Artikel gemäss Anspruch 25.

## Claims

**1.** Heat-curing epoxy resin composition comprising

a) at least one epoxy resin **A** having on average more than one epoxide group per molecule;
b) at least one hardener **B** for epoxy resins which is activated by elevated temperature and is an amine, amide, carboxylic anhydride or polyphenol; and
c) at least one accelerator **C** of the formula (Ia) or (Ib)

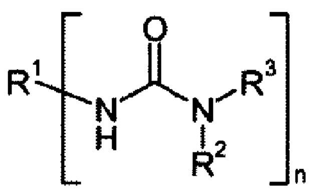
(Ia)

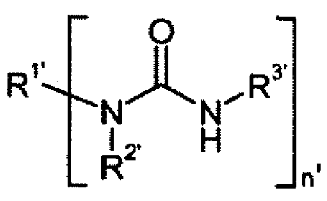
(Ib)

where $R^1$ is H or an n-valent aliphatic, cycloaliphatic or araliphatic radical;

$R^2$ and $R^3$ are
either
each independently of one another an alkyl group or aralkyl group;
or

together a divalent aliphatic radical having 3 to 20 C atoms which is part of an unsubstituted or substituted, heterocyclic ring having 5 to 8, preferably 6, ring atoms;
$R^{1'}$ is an n'-valent aliphatic, cycloaliphatic or araliphatic radical;
$R^{2'}$ is an alkyl group or aralkyl group or alkylene group;
$R^{3'}$ independently at each occurrence is H or an alkyl group or aralkyl group; and n and n' are each a value from 1 to 4, more particularly are 1 or 2, and

d) at least one toughener **D**.

**2.** Heat-curing epoxy resin composition according to Claim 1, **characterized in that** n is 1 or 2.

**3.** Heat-curing epoxy resin composition according to Claim 1 or 2, **characterized in that** $R^1$ is H and $R^2$ and $R^3$ are each a methyl, ethyl or propyl group, preferably each a methyl group.

**4.** Heat-curing epoxy resin composition according to Claim 1 or 2, **characterized in that** $R^1$ is alternatively an alkylene group having 4 to 10 carbon atoms, more particularly a hexamethylene group;
or

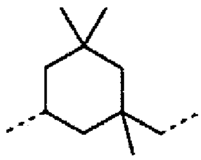

or
a biuret or an isocyanurate of an aliphatic or araliphatic diisocyanate, following removal of the isocyanate groups;
or
a xylylene group, more particularly an m-xylylene group.

**5.** Heat-curing epoxy resin composition according to any of the preceding claims, **characterized in that** the hardener **B** is selected from the group consisting of diaminodiphenyl sulfone, adipic dihydrazide, derivatives of trimellitic anhydride, novolaks and dicyandiamide, preferably dicyandiamide.

**6.** Heat-curing epoxy resin composition according to any of the preceding claims, **characterized in that** the heat-curing epoxy resin composition is free from organic carboxylic acids.

**7.** Heat-curing epoxy resin composition according to any of the preceding claims, **characterized in that** the toughener **D** is selected from the group consisting of blocked polyurethane polymers, liquid rubbers, epoxy resin-modified liquid rubbers and core-shell polymers.

**8.** Heat-curing epoxy resin composition according to any of the preceding claims, **characterized in that** the toughener **D** is a liquid rubber which is an acrylonitrile/butadiene copolymer which is terminated with carboxyl groups or (meth) acrylate groups or epoxide groups, or is a derivative thereof.

**9.** Heat-curing epoxy resin composition according to any of the preceding claims, **characterized in that** the toughener **D** is a blocked polyurethane polymer of the formula (II)

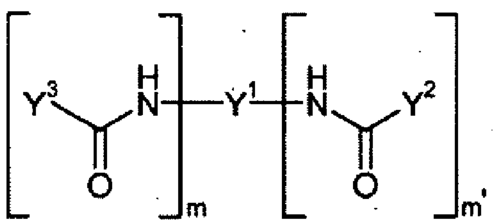

(II)

where

$Y^1$ is a linear or branched polyurethane polymer **PU1** terminated with m+m' isocyanate groups, following the removal of all of the terminal isocyanate groups;
$Y^2$ independently at each occurrence is a blocking group which is eliminated at a temperature above 100°C;
$Y^3$ independently at each occurrence is a group of the formula (II')

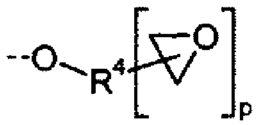 (II')

where $R^4$ is a radical of an aliphatic, cycloaliphatic, aromatic or araliphatic epoxide containing a primary or secondary hydroxyl group, following the removal of the hydroxide and epoxide groups;
p = 1, 2 or 3 and
m and m' are each values between 0 and 8, with the proviso that m+m' is a value from 2 to 8.

**10.** Heat-curing epoxy resin composition according to Claim 9, **characterized in that** $Y^2$ is a radical which is selected from the group consisting of

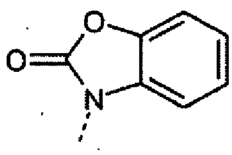, 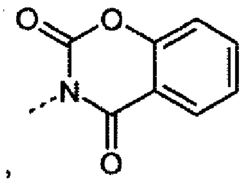, 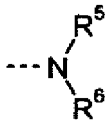, 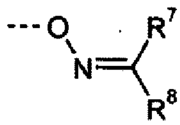,

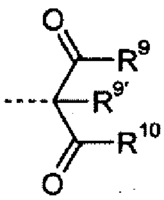, 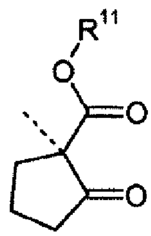, 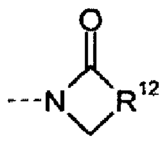, 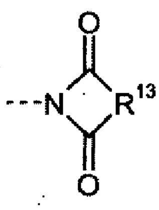,

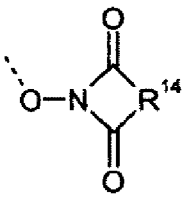, 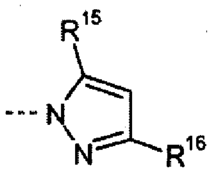, 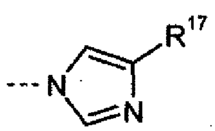, 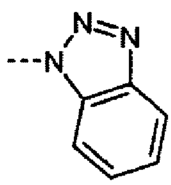,

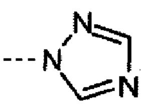, 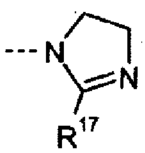 and 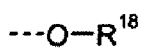;

where

$R^5$, $R^6$, $R^7$ and $R^8$ each independently of one another are an alkyl or cycloalkyl or aryl or aralkyl or arylalkyl group

or $R^5$ together with $R^6$, or $R^7$ together with $R^8$, form part of a 4- to 7-membered ring which optionally is substituted; $R^9$, $R^{9'}$ and $R^{10}$ each independently of one another are an alkyl or aralkyl or aryl or arylalkyl group or are an alkyloxy or aryloxy or aralkyloxy group; $R^{11}$ is an alkyl group,
$R^{12}$, $R^{13}$ and $R^{14}$, each independently of one another, are an alkylene group having 2 to 5 C atoms which optionally contains double bonds or is substituted, or are a phenylene group or a hydrogenated phenylene group; $R^{15}$, $R^{16}$ and $R^{17}$, each independently of one another, are H or are an alkyl group or an aryl group or an aralkyl group; and
$R^{18}$ is an aralkyl group or is a monocyclic or polycyclic, substituted or unsubstituted aromatic group which, optionally, contains aromatic hydroxyl groups.

**11.** Heat-curing epoxy resin composition according to Claim 9 or 10, **characterized in that** m is different from 0.

**12.** Heat-curing epoxy resin composition according to any of the preceding claims, **characterized in that** the epoxy resin composition comprises at least one chemical blowing agent, more particularly in an amount of 0.1% - 3% by weight, based on the weight of the composition.

**13.** Heat-curing epoxy resin composition according to any of the preceding claims, **characterized in that** the fraction of the epoxy resin **A** is 10% - 85%, more particularly 15% - 70%, preferably 15% - 60% by weight, based on the weight of the composition.

**14.** Heat-curing epoxy resin composition according to any of the preceding claims, **characterized in that** the amount of the hardener **B** for epoxy resins which is activated by elevated temperature is 0.1% - 30%, more particularly 0.2% - 10% by weight, based on the weight of the epoxy resin **A.**

**15.** Heat-curing epoxy resin composition according to any of the preceding claims, **characterized in that** the amount of the accelerator **C** is 0.01% - 6.0%, more particularly 0.02% - 4.0%, preferably 0.02% - 2.0% by weight, based on the weight of the epoxy resin **A.**

**16.** Heat-curing epoxy resin composition according to any of the preceding claims, **characterized in that** the fraction of the toughener **D** is 0.1% - 50%, more particularly 0.5% - 30% by weight, based on the weight of the composition.

**17.** Use of a heat-curing epoxy resin composition according to any of Claims 1 to 16 as a one-component heat-curing adhesive, more particularly as a heat-curing one-component body shell adhesive in vehicle construction.

**18.** Use of a heat-curing epoxy resin composition according to any of Claims 1 to 16 for producing coatings, more particularly paints.

**19.** Use of an accelerator of the formula (Ia) or (Ib) as present in a heat-curing epoxy resin composition according to any of Claims 1 to 16 for increasing the impact strength of heat-curing epoxy resin compositions.

**20.** Method of adhesively bonding heat-stable materials, more particularly metals, **characterized in that** these materials are contacted with a heat-curing epoxy resin composition according to any of Claims 1 to 16, and **in that** the method comprises one or more steps of curing at a temperature of 100 - 220°C, preferably 120 - 200°C.

**21.** Method of adhesive bonding according to Claim 20, **characterized in that** the materials are contacted with a heat-curing epoxy resin composition according to any of Claims 1 to 16, and **in that**, after adhesive bonding, the adhesively bonded materials are used at temperatures between 120°C and -40°C, preferably between 110°C and -40°C, more particularly between 100°C and -40°C.

**22.** Adhesively bonded article obtained by a method according to Claim 20 or 21.

**23.** Adhesively bonded article according to Claim 22, **characterized in that** the article is a vehicle or a component for installation in or on a vehicle.

**24.** Use of a heat-curing epoxy resin composition according to any of Claims 1-16 for producing a structural foam for reinforcing cavities, more particularly metallic structures.

**25.** Foamed article obtained by at least partially filling a cavity with a heat-curing composition according to any of Claims

1 to 16 and heating the adhesively bonded materials to a temperature of 100-220°C, preferably 120-200°C.

**26.** Vehicle or vehicle part comprising a foamed article according to Claim 25.

## Revendications

**1.** Composition de résine époxy thermodurcissable, comprenant

a) au moins une résine époxy **A** comportant en moyenne plus d'un groupe époxy par molécule ;
b) au moins un durcisseur **B** pour résines époxy, qui est activé par une température élevée et est une amine, un amide, un anhydride d'acide carboxylique ou un polyphénol ; et
c) au moins un accélérateur **C** de formule (Ia) ou (Ib)

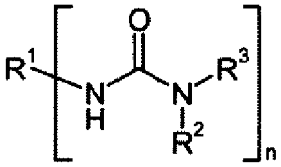 (Ia) 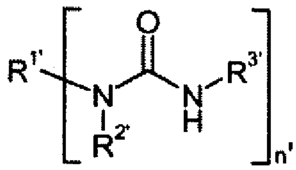 (Ib)

$R^1$ représentant H ou un radical aliphatique, cycloaliphatique ou araliphatique n-valent ;
$R^2$ et $R^3$ représentent
soit
chacun indépendamment l'un de l'autre un groupe alkyle ou aralkyle ;
soit
ensemble un radical aliphatique divalent ayant de 3 à 20 atomes de carbone, qui fait partie d'un cycle hétérocyclique éventuellement substitué ayant de 5 à 8, de préférence 6 atomes formant le cycle ;
$R^{1'}$ représente un radical aliphatique, cycloaliphatique ou araliphatique n'-valent ;
$R^{2'}$ représente un groupe alkyle ou aralkyle ou alkylène ;
$R^{3'}$ représente, chaque fois indépendamment, H ou un groupe alkyle ou un groupe aralkyle ; et
n et n' ont chacun une valeur de 1 à 4, en particulier de 1 ou 2, ainsi que

d) au moins un agent améliorant la ténacité **D**.

**2.** Composition de résine époxy thermodurcissable selon la revendication 1, **caractérisée en ce que** n = 1 ou 2.

**3.** Composition de résine époxy thermodurcissable selon la revendication 1 ou 2, **caractérisée en ce que** $R^1$ représente H et $R^2$ et $R^3$ représentent un groupe méthyle, éthyle ou propyle, de préférence un groupe méthyle.

**4.** Composition de résine époxy thermodurcissable selon la revendication 1 ou 2, **caractérisée en ce que** $R^1$ représente soit

un groupe alkylène ayant de 4 à 10 atomes de carbone, en particulier un groupe hexaméthylène ; soit

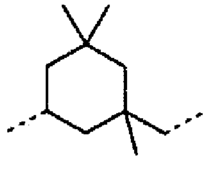

ou
un biuret ou un isocyanurate d'un diisocyanate aliphatique ou araliphatique, après élimination des groupes

isocyanate ;
ou
un groupe xylylène, en particulier un groupe m-xylylène.

5. Composition de résine époxy thermodurcissable selon une ou plusieurs des revendications précédentes, **caractérisée en ce que** le durcisseur **B** est choisi dans le groupe constitué par la diaminodiphénolsulfone, le dihydrazide d'acide adipique, des dérivés d'anhydride trimellitique, des Novolaques et le dicyanodiamide, de préférence est le dicyanodiamide.

6. Composition de résine époxy thermodurcissable selon l'une quelconque des revendications précédentes, **caractérisée en ce que** la composition de résine thermodurcissable est exempte d'acides carboxyliques organiques.

7. Composition de résine époxy thermodurcissable selon l'une quelconque des revendications précédentes, **caractérisée en ce que** l'agent améliorant la ténacité **D** est choisi dans le groupe constitué par les polymères polyuréthanne bloqués, les caoutchoucs liquides, les caoutchoucs liquides modifiés par des résines époxy et des polymères à noyau-enveloppe.

8. Composition de résine époxy thermodurcissable selon l'une quelconque des revendications précédentes, **caractérisée en ce que** l'agent améliorant la ténacité **D** est un caoutchouc liquide qui est un copolymère acrylonitrile/butadiène qui est terminé par des groupes carboxy ou (méth)acrylate ou des groupes époxy, ou est un dérivé de celui-ci.

9. Composition de résine époxy thermodurcissable selon l'une quelconque des revendications précédentes, **caractérisée en ce que** l'agent améliorant la ténacité **D** est un polymère polyuréthanne bloqué de formule (II)

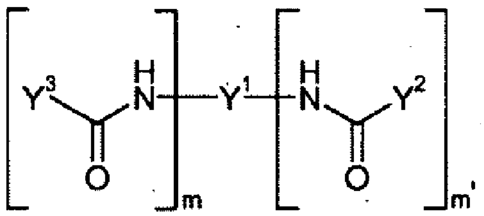

(II)

dans laquelle

$Y^1$ représente un polymère polyuréthanne **PU1** linéaire ou ramifié, terminé par m + m' groupes isocyanate, après l'élimination de tous les groupes isocyanate en bout de chaîne ;
$Y^2$ représente, chaque fois indépendamment, un groupe bloquant qui se sépare à une température de plus de 100 °C ;
$Y^3$ représente, chaque fois indépendamment, un groupe de formule (II')

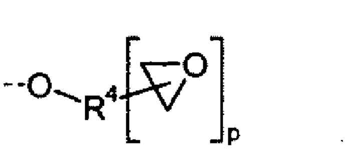

(II')

dans laquelle $R^4$ représente un reste d'un époxyde aliphatique, cycloaliphatique, aromatique ou araliphatique contenant un groupe hydroxy primaire ou secondaire, après l'élimination des groupes hydroxy et époxy ;
p = 1, 2 ou 3 et
m et m' représentent des valeurs comprises entre 0 et 8, étant entendu que la somme m+m' a une valeur de 2 à 8.

10. Composition de résine époxy thermodurcissable selon la revendication 9, **caractérisée en ce que** $Y^2$ représente un radical qui est choisi dans l'ensemble constitué par

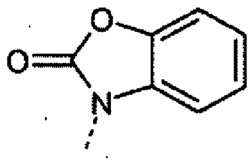, 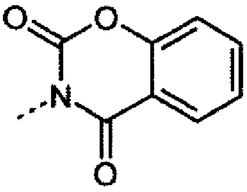, 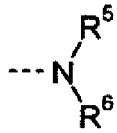, 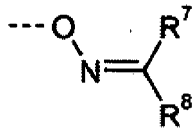,

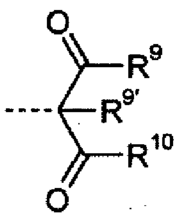, 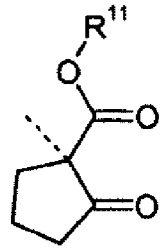, 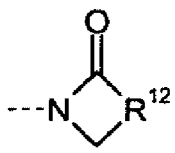, 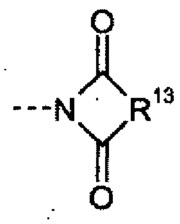,

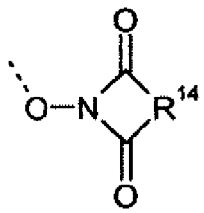, 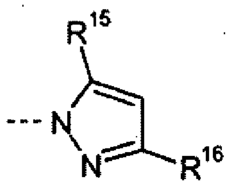, 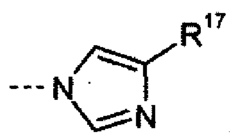, 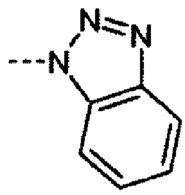,

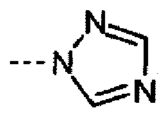, 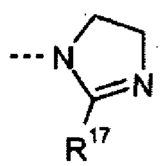 et 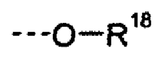;

où

$R^5$, $R^6$, $R^7$ et $R^8$ représentent chacun, indépendamment les uns des autres, un groupe alkyle ou cycloalkyle ou aryle ou aralkyle ou arylalkyle, ou $R^5$ conjointement avec $R^6$, ou $R^7$ conjointement avec $R^8$ forment une partie d'un cycle à 4-7 chaînons qui est éventuellement substitué ;
$R^9$, $R^{9'}$ et $R^{10}$ représentent, chacun indépendamment, un groupe alkyle ou aralkyle ou aryle ou arylalkyle ou représentent un groupe alkyloxy ou aryloxy ou aralkyloxy ;
$R^{11}$ représente un groupe alkyle ;
$R^{12}$, $R^{13}$ et $R^{14}$ représentent, chacun indépendamment, un groupe alkylène ayant de 2 à 5 atomes de carbone, qui comporte éventuellement des doubles liaisons ou est substitué, ou représentent un groupe phénylène ou un groupe phénylène hydrogéné ;
$R^{15}$, $R^{16}$ et $R^{17}$ représentent, chacun indépendamment, H ou groupe alkyle ou un groupe aryle ou un groupe aralkyle ; et
$R^{18}$ représente un groupe alkyle ou un groupe aromatique mono- ou polynucléaire, substitué ou non substitué, qui comporte éventuellement des groupes hydroxy aromatiques.

**11.** Composition de résine époxy thermodurcissable selon la revendication 9 ou 10, **caractérisée en ce que** m est différent de 0.

**12.** Composition de résine époxy thermodurcissable selon l'une quelconque des revendications précédentes, **caractérisée en ce que** la composition de résine époxy contient au moins un agent porogène, en particulier en une quantité de 0,1 à 3 % en poids, par rapport au poids de la composition.

**13.** Composition de résine époxy thermodurcissable selon l'une quelconque des revendications précédentes, **caractérisée en ce que** la proportion de la résine époxy **A** va de 10 à 85 % en poids, en particulier de 15 à 70 % en poids, de préférence de 15 à 60 % en poids, par rapport au poids de la composition.

**14.** Composition de résine époxy thermodurcissable selon l'une quelconque des revendications précédentes, **caractérisée en ce que** la quantité du durcisseur **B** pour résines époxy, qui est activé par une température élevée, va de 0,1 à 30 % en poids, en particulier de 0,2 à 10 % en poids, par rapport au poids de la résine époxy **A.**

**15.** Composition de résine époxy thermodurcissable selon l'une quelconque des revendications précédentes, **caractérisée en ce que** la quantité de l'accélérateur **C** va de 0,01 à 6,0 % en poids, en particulier de 0,02 à 4,0 % en poids, de préférence de 0,02 à 2,0 % en poids, par rapport au poids de la résine époxy **A.**

**16.** Composition de résine époxy thermodurcissable selon l'une quelconque des revendications précédentes, **caractérisée en ce que** la proportion de l'agent améliorant la ténacité **D** va de 0,1 à 50 % en poids, en particulier de 0,5 à 30 % en poids, par rapport au poids de la composition.

**17.** Utilisation d'une composition de résine époxy thermodurcissable selon l'une quelconque des revendications 1 à 16, en tant qu'adhésif thermodurcissable monocomposant, en particulier en tant qu'adhésif monocomposant de construction de base dans la construction de véhicules.

**18.** Utilisation d'une composition de résine époxy thermodurcissable selon l'une quelconque des revendications 1 à 16, pour la production de revêtements, en particulier de peintures.

**19.** Utilisation d'un accélérateur de formule (Ia) ou (Ib), tel qu'il apparaît dans une composition de résine époxy thermodurcissable selon l'une quelconque des revendications 1 à 16, pour l'augmentation de la résistance au choc de compositions de résines époxy thermodurcissables.

**20.** Procédé pour le collage de matériaux thermostables, en particulier de métaux, **caractérisé en ce qu'**on met ces matériaux en contact avec une composition de résine époxy thermodurcissable selon l'une quelconque des revendications 1 à 16 et **en ce que** le procédé comprend une ou plusieurs étapes du durcissement à une température de 100-220 °C, de préférence de 120-200 °C.

**21.** Procédé pour le collage selon la revendication 20, **caractérisé en ce qu'**on met ces matériaux en contact avec une composition de résine époxy thermodurcissable selon l'une quelconque des revendications 1 à 16 et **en ce qu'**après le collage les matériaux collés sont utilisés à des températures comprises entre 120 °C et -40 °C, de préférence entre 110 °C et -40 °C, en particulier entre 100 °C et -40 °C.

**22.** Article collé, qui est obtenu par un procédé selon la revendication 20 ou 21.

**23.** Article collé selon la revendication 22, **caractérisé en ce que** l'article est un véhicule ou une pièce de construction d'un véhicule.

**24.** Utilisation d'une composition de résine époxy thermodurcissable selon l'une quelconque des revendications 1 à 16, pour la production d'une mousse de structure pour le renforcement d'espaces vides, en particulier de structures métalliques.

**25.** Article expansé, qui est obtenu par un remplissage au moins partiel d'un espace vide avec une composition thermodurcissable selon l'une quelconque des revendications 1 à 16 et chauffage à une température de 100-220 °C, de préférence de 120-200 °C, du matériau collé.

**26.** Véhicule ou pièce de véhicule contenant un article expansé selon la revendication 25.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004055092 A
- WO 2005007720 A
- WO 2007003650 A
- US 5707439 A
- US 6197849 B
- DE 2123033


### In der Beschreibung aufgeführte Nicht-Patentliteratur


- Römpp, CD Römpp Chemie Lexikon. Georg Thieme Verlag, 1995